# EUROPEAN PATENT SPECIFICATION

(11) **EP 1 715 540 B1**
(45) Date of publication and mention of the grant of the patent: **22.05.2013**
(21) Application number: 05703948.9
(22) Date of filing: 14.01.2005
(51) Int. Cl.: H01M 8/02, H01M 8/04, H01M 8/06

(54) **FUEL CELL POWER GENERATING DEVICE**
BRENNSTOFFZELLENVORRICHTUNG ZUR ENERGIEERZEUGUNG
DISPOSITIF DE GÉNÉRATION D'ÉNERGIE PAR PILE À COMBUSTIBLE

(30) Priority: 14.01.2004 JP 2004007227
(43) Date of publication of application: 25.10.2006
(73) Proprietor: TOYOTA JIDOSHA KABUSHIKI KAISHA, Toyota-shi, Aichi-ken, 471-8571 (JP)
(72) Inventor: SHIMAZU, Takashi c/o K.K. TOYOTA CHUO KENKYUSHO, Aichi-gun, Aichi 4801192 (JP); AOKI, Hiroshi c/o K.K. TOYOTA CHUO KENKYUSHO, Aichi-gun, Aichi 4801192 (JP); MITSUI, Hiroyuki c/o K.K. TOYOTA CHUO KENKYUSHO, Aichi-gun, Aichi 4801192 (JP); OGINO, Shigeru, Toyota-shi, Aichi 4718571 (JP); AOYAMA, Satoshi, Toyota-shi, Aichi 4718571 (JP); SHIOKAWA, Satoshi c/o K.K. INTER PROJECT, Shizuoka-shi, hizuoka 4200859 (JP); IGUCHI, Satoshi, Toyota-shi, Aichi 4718571 (JP); KIMURA, Kenji, Toyota-shi, Aichi 4718571 (JP); SATOU, Hiromichi, Toyota-shi, Aichi 4718571 (JP); IZAWA, Yasuhiro, Toyota-shi, Aichi 4718571 (JP); ITO, Naoki, Toyota-shi, Aichi 4718571 (JP); IIJIMA, Masahiko, Toyota-shi, Aichi 4718571 (JP)
(74) Representative: TBK
(86) International application number: PCT/JP2005/000720
(87) International publication number: WO 2005/069416

(56) References cited:
- WO-A1-2004/082049
- JP-A- 4 345 762
- JP-A- 5 299 105
- JP-A- 2002 289 245
- JP-A- 2003 151 599
- JP-A- 2004 273 343

## Description

### TECHNICAL FIELD

The present invention relates to a fuel cell system generating electricity by generating a hydrogen-containing reformed gas from a reforming fuel in a reformer and using the hydrogen in the hydrogen-containing reformed gas in a fuel cell.

### BACKGROUND ART

Fuel cell systems generating electricity by using a reforming fuel such as hydrocarbon or alcohol have a reformer generating a reformed gas containing hydrogen from the reforming fuel, and a hydrogen-separating membrane device separating high-purity hydrogen from the reformed gas, and a fuel cell generating electricity by converting the hydrogen into the proton state and allowing it to react with oxygen. The reformer generates the reformed gas, for example, in steam-reforming reaction of the reforming fuel with water and partial oxidation reaction of the reforming fuel with oxygen. The hydrogen-separating membrane device has a hydrogen-separating membrane for example of palladium, and the hydrogen-separating membrane has a property allowing permeation only of hydrogen. The fuel cell has an anode channel to which the hydrogen permeated through the hydrogen-separating membrane is supplied, a cathode channel to which air and others are supplied, and a proton conductor (electrolyte) placed between these channels.

And, electrical power generation is carried out in the fuel cell system while the hydrogen supplied to the anode channel is allowed to permeate through the proton conductor as it is converted into the proton state, and the proton is allowed to react with oxygen in air, generating water in the cathode channel. Examples of the fuel cell systems include those disclosed in the following Patent Documents 1 to 3.

The cathode off gas discharged from the cathode channel contains water generated in reaction of the proton with oxygen, oxygen unconsumed in reaction with proton oxygen, and others. Thus, the cathode offgas is used in reactions in the reformer, in the fuel cell of JP 2003-151599 A (Patent Document 1). The anode offgas discharged from the anode channel also contains hydrogen that unpermeated through the proton conductor, water sent from the reformer, and others. Thus, the anode offgas is used in the reforming reaction in the reformer, in the fuel cell of JP 2001-223017 A (Patent Document 2).

Examples of such fuel cells include solid polymer-membrane fuel cells using a solid polymer membrane as the proton conductor, phosphorus acid fuel cells using a phosphoric acid-impregnated silicon carbide as the proton conductor, and the like. The reaction in the reformer is preformed at a high temperature for example of 400°C or more for prevention of precipitation of carbon, but the operational temperature of the fuel cell is about 20 to 120°C in solid polymer-membrane fuel cells and about 120 to 210°C in phosphorus acid fuel cells because the proton conductor is used as it is impregnated with a solution.

Thus in the conventional fuel cell system, it was necessary to lower the temperature of the reformed gas or hydrogen significantly before its supply to the fuel cell, because the temperatures of the reformed gas generated in the reformer and the hydrogen permeated through the hydrogen-separating membrane are much higher than that of the hydrogen supplied to the fuel cell.

Accordingly in the fuel cell of Patent Document 1, the heat of the reformed gas is transferred to the cathode offgas and the temperature of the reformed gas is lowered by heat exchange of the reformed gas generated in the reformer with the cathode offgas in a heat exchanger and the temperature of the hydrogen permeated through the hydrogen-separating membrane is also lowered in another heat exchanger, before supply of the gases to the fuel cell.

Alternatively in the fuel cell of Patent Document 2, the temperature of the hydrogen permeated through the hydrogen-separating membrane is lowered by passage through a condenser, and then it is supplied to the fuel cell.

Thus in the conventional fuel cell systems, the temperature of the hydrogen to be supplied to the fuel cell is lowered deliberately, and it is not possible to use the heat of the cathode offgas discharged from the cathode channel of the fuel cell in reaction in the reformer. In addition, use of the heat exchanger, or the condenser, and the like leads to energy loss and also makes the structure of the fuel cell system more complicated.

Further, as described above, the proton conductor is used as it is impregnated with a solution in the solid polymer-membrane and phosphorus acid fuel cells. As a result, in these fuel cells the water generated in reaction of the proton and oxygen in air in the cathode channel permeates through the proton conductor into the anode channel, by the back refusion due to the difference in water content between the anode and cathode channels. And, the water permeated into the anode channel is discharged from the anode channel by vaporization based on its saturated vapor pressure.

It is thus not possible to recover all of the water generated in the electrical power generation in the fuel cell from the cathode channel and to adjust the amount of water supplied to the reformer by using the total amount of water.

The inability to recover all water often results in insufficient supply of water for the reaction in the reformer in conventional fuel cell systems. Thus in conventional fuel cell systems, sufficient supply of water to the reformer and stabilized operation thereof demand supply of additional water to the reformer or concentration of the water contained in the cathode offgas and supply thereof to the reformer.

There is also a concern about vaporization of the components in the proton conductor and deposition thereof in water in the cathode channel in the conventional fuel cell systems. For example, there is a concern about deposition of fluorine-based components in water in the solid polymer-membrane fuel cells and solubilization of phosphoric acid in water in the phosphorus acid fuel cells. Such a phenomenon leads to deterioration in purity of the water in the cathode offgas sent to the reformer, possibly causing a problem of the poisoning of the reforming catalyst in reformer due to adsorption of the vaporized components in proton conductor.

EP 1 615 278 A1 (Patent Document 3), which is considered as comprised in the state of the art pursuant to Art. 54(3) EPC, discloses a fuel cell system comprising a reformer and fuel cells that generate electricity by using hydrogen-containing reformed gas generated by the reformer. Part of the cathode offgas of the fuel cells is fed via a branched pipe into a mixer to be blended with only fuel gas and a separate supply of steam. The resulting gas mixture is led into the reformer to be subject to the reforming reaction.

### Problems to be solved by the Invention

An object of the present invention, which was made in view of the conventional problems, is to provide a fuel cell system simpler in structure that allows recovery of all water generated in the cathode channel and improvement in energy efficiency further by using the remaining oxygen and the high-temperature heat energy of the cathode offgas, and a method of generating electricity thereby.

### SUMMARY OF THE INVENTION

A first aspect of the present invention is a fuel cell system as defined in claim 1.

The fuel cell system of the invention has a fuel cell having an electrolyte of a laminate of the hydrogen-separating metal layer and the proton conductor layer. In the fuel cell system of the invention, it is possible to operate the fuel cell at a high temperature, for example of 300 to 600°C, because the proton conductor layer is made of a ceramic material and can be used as it is unimpregnated with water. It is thus possible to feed the hydrogen-containing reformed gas directly from the reformer to the fuel cell.

It is also possible to feed the cathode offgas discharged from the cathode channel directly to the reformer at a high temperature close to the operational temperature of the fuel cell. Thus in the fuel cell system, it is possible to make the temperature at which the hydrogen-containing reformed gas is generated in the reformer significantly close to the operational temperature of the fuel cell.

In the cathode channel of the fuel cell, the oxygen in the oxygen-containing gas supplied to the cathode channel reacts with the proton (also called H⁺ or hydrogen ion) supplied from the anode channel to the cathode channel through the electrolyte to generate water. The fuel cell system can generate electricity in the reaction due to withdraw electricity from the anode and cathode electrodes formed on the electrolyte.

The cathode offgas discharged from the cathode channel after reaction in the cathode channel contains oxygen unconsumed in the reaction (residual oxygen), water generated in the reaction (generated water), and the heat quantity by high-temperature operation of the fuel cell.

The water generated in the cathode channel of the fuel cell is high-temperature steam, for example, at 300 to 600°C, and thus, the generated water is not impregnated into the proton conductor layer; and the generated water does not penetrate from the cathode channel to the anode channel, because the hydrogen-separating metal layer has a property allowing permeation only of hydrogen. For that reason, all of the generated water can be recovered from the cathode channel via the cathode offgas line.

Thus in the present invention, it is possible to obtain the water needed for reaction in the reforming reaction channel of the reformer from the cathode offgas containing water generated in electrical power generation of the fuel cell and to supply a sufficient amount of water to the reforming reaction channel. In the present invention, it is also possible to adjust the amount of water supplied to the reforming reaction channel of the reformer, by using all generated water in the cathode offgas.

Thus, it becomes easier to adjust the operational condition of the fuel cell system and stabilize the operation of the fuel cell system.

In the fuel cell, it is also possible to prevent vaporization of the components in the proton conductor layer and deposition thereof in the generated water in the cathode channel, because the proton conductor layer is used in the dry state. Accordingly, the generated water in the cathode offgas sent to the reformer is kept pure, eliminating, for example, the problem of the poisoning of reforming catalyst when it is placed in the reforming reaction channel of the reformer.

When the hydrogen-containing reformed gas is generated in reaction between the reforming fuel and the cathode offgas in the reformer in the present invention, it is also possible to use the oxygen remaining in the cathode offgas and a sufficient amount of the water generated in the reformer and also the high-temperature heat energy of the cathode offgas. It is thus possible to generate the hydrogen-containing reformed gas in reaction of the reforming fuel and the cathode offgas having the high-temperature heat energy in the reformer and to improve the energy efficiency in the reformer.

As described above, it is also possible to make the temperature at which the hydrogen-containing reformed gas is generated in the reformer significantly close to the operational temperature of the fuel cell in the invention. Thus in the invention, it is not needed to install apparatuses such as heat exchanger and condenser that may be needed because of the difference in temperature, between the reformer and the fuel cell, which eliminates the energy loss by use of them and makes the structure of the fuel cell system simpler.

Thus according to the invention, it is possible to simplify the structure of the fuel cell system, recover all of the generated water from the cathode channel, and improve the energy efficiency of the fuel cell system by using the high-temperature heat energy of the cathode offgas.

In addition to the fuel cell system of the invention, there are known solid oxide fuel cells (SOFCs) operating at a high temperature of approximately 900 to 1,000°C. The solid oxide fuel cells do not cause a problem of back refusion, i.e., penetration of water between the anode and cathode channels via the electrolyte.

However, the solid oxide fuel cells generate electricity by making the oxygen supplied to the anode channel permeate through the oxide ionic conductor, thus converting the oxygen into the oxide ion state, permeate into the cathode channel, and react with hydrogen.

For that reason, the solid oxide fuel cells are completely different from the fuel cell according to the invention, which has an electrolyte of a laminate of the hydrogen-separating metal layer and the proton conductor layer. It is not possible to recover all generated water in the cathode offgas, which is generated in the anode channel during electrical power generation, in solid oxide fuel cells.

A second aspect of the invention is a method of generating electricity in a fuel cell system as defined in claim 20.

The method of generating electricity in a fuel cell system of the present invention is a method of generating electricity by using a fuel cell having an electrolyte of a laminate of the hydrogen-separating metal layer and the proton conductor layer similar to the invention above and operating the fuel cell at a high temperature, for example, of 300 to 600°C.

Similarly to the invention above, the hydrogen-containing reformed gas can be generated in reaction of the remaining oxygen, a sufficient amount of the generated water, the cathode offgas having the high-temperature heat energy, and the reforming fuel in the reformer. According to the present invention, it is thus possible to generate electricity by making the most of the high-temperature heat energy of the cathode offgas and improve the energy efficiency of the fuel cell system additionally.

### BRIEF DESCRIPTION OF THE DRAWINGS

Figure 1 is an explanatory drawing illustrating the configuration of a fuel cell system in Example 1.
Figure 2 is an explanatory drawing illustrating the configuration of a fuel cell in Example 1.
Figure 3 is an explanatory drawing illustrating the configuration of another fuel cell system in Example 1.
Figure 4 is an explanatory drawing illustrating the configuration of another fuel cell in Example 1.
Figure 5 is an explanatory drawing illustrating the configuration of a fuel cell system in Example 2, when an oxygen-separating membrane is placed on the cathode offgas line.
Figure 6 is an explanatory drawing illustrating the configuration of another fuel cell system in Example 2, when an oxygen-separating membrane is placed on the cathode offgas line.
Figure 7 is an explanatory drawing illustrating the configuration of another fuel cell system in Example 2, when an oxygen-separating membrane is placed on the cathode offgas line.
Figure 8 is an explanatory drawing illustrating the configuration of another fuel cell system in Example 2, when an oxygen-separating membrane is placed on the cathode offgas line.
Figure 9 is an explanatory drawing illustrating the configuration of a fuel cell system in Example 3, when an oxygen-containing refrigerant gas is mixed into the cathode offgas line.
Figure 10 is an explanatory drawing illustrating the configuration of a fuel cell system in Example 3, when a refrigerant offgas is mixed into the cathode offgas line.
Figure 11 is an explanatory drawing illustrating the configuration of a fuel cell system in Example 3, when air is mixed into the cathode offgas line.
Figure 12 is an explanatory drawing illustrating the configuration of a fuel cell system in Example 3, when a reforming fuel is mixed into the cathode offgas line.
Figure 13 is an explanatory drawing illustrating the configuration of a fuel cell system in Example 4, when the anode offgas is mixed into the cathode offgas line.
Figure 14 is an explanatory drawing illustrating the configuration of a fuel cell system in Example 4, when the hydrogen-containing reformed gas is mixed into the cathode offgas line.
Figure 15 is an explanatory drawing illustrating the configuration of a fuel cell system in Example 4, when hydrogen is mixed into the cathode offgas line.
Figure 16 is an explanatory drawing illustrating the configuration of a fuel cell system in Example 5, when the cathode offgas line and the air line are connected to the mixer supplying the reforming fuel.
Figure 17 is an explanatory drawing illustrating the configuration of a fuel cell system in Example 5, when the cathode offgas line, the air line and the steam line are connected to the mixer supplying the reforming fuel.
Figure 18 is an explanatory drawing illustrating the configuration of a fuel cell system in Example 5, when the cathode offgas line and the air line are connected to the mixer supplying the reforming fuel and the cathode offgas is supplied directly to the reformer.

### BEST MODE OF CARRYING OUT THE INVENTION

Favorable embodiments of the first and second present inventions described above will be described below.

All of the cathode offgas discharged from the cathode channel may be sent to the reformer via the cathode offgas line, or only part of it may be sent to the reformer, in the first and second inventions. The flow rate of the cathode offgas sent to the reformer is properly adjusted to the flow rate favorable for the reaction in the reformer.

For example, a steam reforming reaction generating hydrogen, carbon monooxide and others from a reforming fuel and water, and a partial oxidation reaction generating water, carbon monooxide, and others by combustion of part of the reforming fuel with oxygen occur in the reforming reaction channel of the reformer. In addition to generating hydrogen by a steam reforming reaction, it is possible to keep the reaction temperature in the reformer higher, by allowing the partial oxidation reaction as an exothermic reaction to proceed together with the steam reforming reaction, which is an endothermic reaction.

The reforming fuel may be, for example, a hydrocarbon fuel, an alcohol fuel, or the like. Examples of the hydrocarbon fuels include fuel gases such as methane and ethane, liquefied petroleum gases such as propane and butane, and gasolines such as octane. Examples of the alcohol fuels include methanol, ethanol, and the like.

In the first invention, the cathode offgas line feeds the cathode offgas into the reforming reactor channel not via a mixer mixing only the cathode offgas with the reforming fuel or a mixer mixing only the cathode offgas with steam.

The first invention includes an embodiment of feeding the cathode offgas without a mixer into the reforming reactor channel, and an embodiment of connecting the cathode offgas line to a mixer mixing the cathode offgas with the reforming fuel or with the reforming fuel and steam, as well as, for example, with air, anode offgas, the reformer exhaust EGR gas, and others.

In the embodiment of the cathode offgas line feeding the cathode offgas not via a mixer into the reforming reactor channel, it is possible to make the structure of the fuel cell including pipings simpler and eliminate the energy loss due to use of such devices.

When the cathode offgas line is connected to a mixer mixing the cathode offgas with the reforming fuel, or with reforming fuel and steam, as well as, for example, with air, anode offgas, the reformer exhaust EGR gas, and others, it is possible to increase the efficiency of using hydrogen, heat and reforming fuel and the thermal efficiency of the fuel cell by ensuring the oxygen needed for partial oxidation, for example by supplying air from the air line via a mixer into the reformer or supplying the anode offgas and the exhaust EGR gas via the mixer, even when the amount of the oxygen in the cathode offgas is insufficient. It is thus possible to improve the reaction efficiency in the reformer, the efficiency of using the fuel and others, and the energy efficiency of the fuel cell system more.

In addition in the first invention, the reformer preferably has a heat exchange channel that is formed close to the reforming reaction channel and that heats the reforming reaction channel by combustion (Claim 2).

In such a case, it is possible to reduce the rate of the partial oxidation reaction in the reformer by forming the reforming reaction channel and heat exchange channel in the reformer. Thus, it is possible to improve the energy efficiency of the reformer by reducing the feed rates of the reforming fuel supplied into the reformer because the reforming fuel can be sufficiently used for the steam reforming reaction generating hydrogen or others in the reforming reaction channel. In this way, it is possible to improve the energy efficiency of the fuel cell system further.

In addition, an anode offgas line for feeding an anode offgas discharged from the anode channel to the heat exchange channel is preferably connected to the anode channel of the fuel cell (Claim 3).

The anode offgas discharged from the anode channel contains the hydrogen discharged without permeation through the hydrogen-separating metal layer of the electrolyte, and the substances other than hydrogen contained in the hydrogen-containing reformed gas (in particular, combustible substances such as carbon monooxide and methane), and the heat quantity generated in high-temperature operation of the fuel cell.

Accordingly, it is possible to use the hydrogen contained in the anode offgas, the combustible substances, and others for combustion in the heat exchange channel and also to carry out combustion by using the high-temperature heat energy of the anode offgas, by supplying the anode offgas from the anode channel via the anode offgas line to the heat exchange channel. It is also possible to generate the hydrogen-containing reformed gas in the reforming reaction channel, by using the high-temperature heat energy of the cathode offgas. Thus it is possible to improve the energy efficiency of the reformer and the energy efficiency of the fuel cell system.

The fuel cell preferably has a refrigerant channel to which an oxygen-containing refrigerant gas for cooling the fuel cell is supplied (Claim 4).

In such a case, it is possible to keep the temperature in the fuel cell in a particular temperature range, by adjusting the feed rate of the oxygen-containing refrigerant gas to the refrigerant channel of the fuel cell.

A refrigerant offgas line for feeding the refrigerant offgas discharged from the refrigerant channel into the heat exchange channel is preferably connected to the refrigerant channel of the fuel cell (Claim 5).

The refrigerant offgas discharged from the refrigerant channel contains the oxygen contained in the oxygen-containing refrigerant gas and the heat obtained during passage through the fuel cell.

Thus, it is possible to combust the hydrogen contained in the anode offgas and the oxygen contained in the refrigerant offgas in the heat exchange channel and also to carry out combustion by using the high-temperature heat energies respectively of the anode offgas and the refrigerant offgas, by feeding the anode offgas from the anode channel via the anode offgas line to the heat exchange channel and the refrigerant offgas from the refrigerant channel via the refrigerant offgas line to the heat exchange channel. Thus, it is possible to improve the energy efficiency of the reformer and the energy efficiency of the fuel cell system more.

All of the cathode offgas discharged from the cathode channel, or only part of it, can be fed via the cathode offgas line into the reforming reaction channel. It is possible to adjust the flow rate of the cathode offgas sent to the reforming reaction channel properly to the flow rate thereof needed for reaction in the reforming reaction channel.

All or part of the anode offgas and the refrigerant offgas can also be fed via respectively the anode offgas line and the refrigerant offgas line into the heat exchange channel. The flow rate of the anode offgas or the flow rate of the refrigerant offgas sent to the heat exchange channel can be adjusted properly to the flow rate needed for combustion in the heat exchange channel.

Alternatively, an exhaust three-way regulating valve is preferably installed on the cathode offgas line so that the fuel cell system can discharge part of the cathode offgas via the exhaust three-way regulating valve and feed a remaining part of the cathode offgas into the reforming reaction channel (Claim 6).

In such a case, it is possible to adjust the flow rate of the cathode offgas sent to the reforming reaction channel, i.e., the amounts of water and oxygen sent to the reforming reaction channel with the exhaust three-way regulating valve.

The amount of the oxygen remaining in the cathode offgas unconsumed in reaction with proton also varies when the flow rate of the hydrogen-containing gas to the anode channel, the flow rate of the oxygen-containing gas to the cathode channel, or the like varies, and the ratio of the theoretical air quantity to the proton amount (cathode stoichiometry) in the cathode channel varies. It is possible then to reduce the flow rate of the cathode offgas sent to the reforming reaction channel by discharging part of the cathode offgas via the exhaust three-way regulating valve, especially when the amount of the remaining oxygen is more than the amount of oxygen needed for the reforming reaction channel. It is thus possible to keep the amount of the oxygen remaining in the cathode offgas sent to the reforming reaction channel in a suitable range.

When an oxygen-containing gas other than air is used, the theoretical air quantity used in calculating the cathode stoichiometry is a value of the oxygen-containing gas calculated as air.

In the fuel cell system above, it is also possible to change the cathode stoichiometry intentionally, by changing the flow rate of the hydrogen-containing gas sent to the anode channel, the flow rate of the oxygen-containing gas sent to the cathode channel, or the like. It is then possible to adjust the ratio of the amount of the water generated in reaction of the proton and oxygen in the cathode offgas to the amount of the remaining oxygen. It is also possible then to keep the amount of the oxygen remaining in the cathode offgas sent to the reforming reaction channel in a suitable range, by discharging part of the cathode offgas via the exhaust three-way regulating valve.

Alternatively, a supply three-way regulating valve may be installed on the cathode offgas line, so that the fuel cell system can feed part of the cathode offgas into the heat exchange channel via the supply three-way regulating valve, and a remaining part of the cathode offgas into the reforming reaction channel (Claim 7).

In such a case, it is possible to use part of the cathode offgas for combustion in the heat exchange channel and a remaining part of the cathode offgas for reaction in the reforming reaction channel. It is thus possible to improve the energy efficiency of the fuel cell system more, by using the cathode offgas unconsumed in the reforming reaction channel, in the heat exchange channel without discharging all of it.

It is also possible then to reduce the flow rate of the cathode offgas sent to the reforming reaction channel, by using the exhaust three-way regulating valve. It is also possible then to adjust the ratio of the amount of the water generated in the cathode offgas to the amount of the remaining oxygen, by changing the cathode stoichiometry intentionally.

Alternatively, a resupply three-way regulating valve is preferably installed on the cathode offgas line, so that the fuel cell system resupply part of the cathode offgas to the cathode channel via the resupply three-way regulating valve, and a remaining part of the cathode offgas into the reforming reaction channel (Claim 8).

It is possible then to reduce and readjust the oxygen concentration in the oxygen-containing gas supplied to the cathode channel deliberately, by resupplying part of the cathode offgas into the cathode channel.

It is also possible then to reduce the flow rate of the cathode offgas sent to the reforming reaction channel by using the exhaust three-way regulating valve. It is then possible to determine the amount of water sent to the reforming reaction channel by adjusting the flow rate of the gas with the exhaust three-way regulating valve; and it is possible to determine the amount of oxygen sent to the reforming reaction channel by adjusting the resupply rate of the gas to the cathode channel with the resupply three-way regulating valve. In this way, it is possible to adjust the amounts of water and oxygen sent to the reforming reaction channel and the ratio thereof properly.

It is also possible then to adjust the ratio of the amounts of water and oxygen sent to the reforming reaction channel by changing the cathode stoichiometry deliberately.

Alternatively, an oxygen-separating membrane is preferably installed on the cathode offgas line, so that the fuel cell system can discharge part of oxygen in the cathode offgas through the oxygen-separating membrane (Claim 9).

It is then possible to reduce the amount of the oxygen remaining in the cathode offgas and keep the amount of the oxygen remaining in the cathode offgas sent to the reforming reaction channel in a suitable range, by discharging part of the oxygen in the cathode offgas.

It is also possible then to reduce the flow rate of the cathode offgas sent to the reforming reaction channel by using the exhaust three-way regulating valve. It is possible then to determine the amount of water sent to the reforming reaction channel by adjusting the flow rate of the gas with the exhaust three-way regulating valve and to determine the amount of oxygen sent to the reforming reaction channel by adjusting the amount of the oxygen discharged with the oxygen-separating membrane. In this way, it is possible to adjust the amounts of water and oxygen sent to the reforming reaction channel and the ratio thereof properly.

Alternatively, an oxygen-separating membrane is preferably installed on the cathode offgas line so that the fuel cell system can resupply part of oxygen in the cathode offgas through the oxygen-separating membrane into the cathode channel (Claim 10).

It is also possible then to keep the amount of the remaining oxygen in a suitable range by reducing the amount of the oxygen remaining in the cathode offgas sent to the reforming reaction channel with the oxygen-separating membrane.

It is also possible then to increase the oxygen amount in the oxygen-containing gas supplied to the cathode channel and obtain the amount of oxygen needed for the reaction in the fuel cell easily by resupplying part of the oxygen in the cathode offgas into the cathode channel. Thus, it is possible to reduce the flow rate of the oxygen-containing gas supplied to the cathode channel while preserving the cathode stoichiometry at a suitable ratio.

It is also possible then to determine the amount of water sent to the reforming reaction channel by adjusting the flow rate of the gas with the exhaust three-way regulating valve and to determine the amount of oxygen sent to the reforming reaction channel by adjusting the amount of oxygen permeating with the oxygen-separating membrane. It is therefore possible to adjust the amounts of water and oxygen sent to the reforming reaction channel and the ratio thereof properly.

Alternatively, an oxygen-separating membrane is preferably installed on the cathode offgas line, so that the fuel cell system can feed part of oxygen in the cathode offgas through the oxygen-separating membrane into the heat exchange channel (Claim 11).

It is also possible then to keep the amount of the remaining oxygen in a suitable range, by reducing the amount of the oxygen remaining in the cathode offgas sent to the reforming reaction channel with the oxygen-separating membrane.

It is also possible then to use the oxygen in the cathode offgas obtained through the oxygen-separating membrane for combustion in the heat exchange channel. In this way, it is possible to use the oxygen in the cathode offgas unconsumed in the reforming reaction channel in the heat exchange channel effectively and improve the energy efficiency of the fuel cell system more.

It is also possible the to determine the amount of water sent to the reforming reaction channel by adjusting the flow rate of the gas with the exhaust three-way regulating valve and to determine the amount of oxygen sent to the reforming reaction channel by adjusting the amount of oxygen permeating with the oxygen-separating membrane. It is thus possible to adjust the amounts of water and oxygen sent to the reforming reaction channel and the ratio thereof properly.

Alternatively, an oxygen-separating membrane is preferably installed on the cathode offgas line, so that the fuel cell system can store part of oxygen in the cathode offgas through the oxygen-separating membrane in an oxygen buffer (Claim 12).

It is also possible then to keep the amount of the remaining oxygen in a suitable range, by reducing the amount of the oxygen remaining in the cathode offgas sent to the reforming reaction channel with the oxygen-separating membrane.

It is also possible then to store the oxygen in the cathode offgas unconsumed in the reforming reaction channel in the oxygen buffer. It is possible to supply oxygen into the reforming reaction channel from the oxygen buffer, for example, when the amount of oxygen needed for the reforming reaction channel is desirably increased.

It is also possible then to determine the amount of water sent to the reforming reaction channel by adjusting the flow rate of the gas with the exhaust three-way regulating valve and the amount of oxygen sent to the reforming reaction channel by adjusting the amount of oxygen permeating with the oxygen-separating membrane. In this way, it is possible to adjust the amounts of water and oxygen sent to the reforming reaction channel and the ratio thereof properly.

Yet alternatively, the fuel cell system is preferably configured to mix part of the oxygen-containing refrigerant gas into the cathode offgas line (Claim 13).

In such a case, it is possible to increase the amount of the oxygen in the cathode offgas used in the reforming reaction channel by supplying the cathode offgas mixed with part of the oxygen-containing refrigerant gas into the reforming reaction channel, especially when the amount of the oxygen remaining in the cathode offgas is lower than the amount of oxygen needed for the reforming reaction channel.

It is also possible then to reduce the flow rate of the cathode offgas sent to the reforming reaction channel by using the exhaust three-way regulating valve. It is also possible then to determine the amount of water sent to the reforming reaction channel by adjusting the flow rate of the gas with the exhaust three-way regulating valve and to determine the amount of oxygen sent to the reforming reaction channel by adjusting the mixing rate of the oxygen-containing refrigerant gas. In this way, it is possible to adjust the amounts of water and oxygen sent to the reforming reaction channel and the ratio thereof properly.

Alternatively, the fuel cell system may be configured to mix part of the refrigerant offgas into the cathode offgas line (Claim 14).

It is then possible to supply the cathode offgas mixed with part of the refrigerant offgas, which is heated during passage through the fuel cell, into the reforming reaction channel. Thus, it is possible to increase the amount of the oxygen in the cathode offgas almost without decrease in the temperature of the cathode offgas used in the reforming reaction channel.

It is also possible then to reduce the flow rate of the cathode offgas sent to the reforming reaction channel by using the exhaust three-way regulating valve. It is possible then to determine the amount of water sent to the reforming reaction channel by adjusting the flow rate of the gas with the exhaust three-way regulating valve and to determine the amount of oxygen sent to the reforming reaction channel by adjusting the mixing rate of the refrigerant offgas. In this way, it is possible to adjust the amounts of water and oxygen sent to the reforming reaction channel and the ratio thereof properly.

Alternatively, the fuel cell system may be configured to mix air into the cathode offgas line (Claim 15).

It is possible the to increase the amount of the oxygen in the cathode offgas used in the reforming reaction channel by mixing air with the cathode offgas, especially when the amount of the oxygen remaining in the cathode offgas is lower than the amount of oxygen needed for the reforming reaction channel.

It is also possible then to reduce the flow rate of the cathode offgas sent to the reforming reaction channel by using the exhaust three-way regulating valve. It is possible then to determine the amount of water sent to the reforming reaction channel by adjusting the flow rate of the gas with the exhaust three-way regulating valve and to determine the amount of oxygen sent to the reforming reaction channel by adjusting the mixing rate of the air. In this way, it is possible to adjust the amounts of water and oxygen sent to the reforming reaction channel and the ratio thereof properly.

It is possible then to increase the amount of the oxygen in the cathode offgas used in the reforming reaction channel further more effectively by mixing oxygen with the cathode offgas, especially when the amount of the oxygen remaining in the cathode offgas is lower than the amount of oxygen needed for the reforming reaction channel.

It is also possible then to reduce the flow rate of the cathode offgas sent to the reforming reaction channel by using the exhaust three-way regulating valve. It is possible to the determine the amount of water sent to the reforming reaction channel by adjusting the flow rate of the gas with the exhaust three-way regulating valve and to determine the amount of oxygen sent to the reforming reaction channel by adjusting the mixing amount of the oxygen. In this way, it is possible to adjust the amounts of water and oxygen sent to the reforming reaction channel and the ratio thereof properly.

Alternatively, the fuel cell system may be configured to mix a reforming fuel into the cathode offgas line (Claim 16).

In such a case, it is possible to combust the reforming fuel with the oxygen remaining in the cathode offgas in the cathode offgas line. It is possible to reduce the amount of the oxygen in the cathode offgas and increase the amount of water in the cathode offgas by the combustion. It is thus possible to feed the cathode offgas, which is previously adjusted to have an oxygen amount smaller than the water content, into the reforming reaction channel.

It is also possible then to reduce the flow rate of the cathode offgas sent to the reforming reaction channel by using the exhaust three-way regulating valve. It is possible then to adjust the amounts of water and oxygen sent to the reforming reaction channel and the ratio thereof properly by adjusting the amount of the gas discharged through the exhaust three-way regulating valve and by adjusting the mixing rate of the reforming fuel.

Yet alternatively, the fuel cell system may be configured to mix part of the anode offgas into the cathode offgas line (Claim 17).

In such a case, it is possible to combust the hydrogen in the anode offgas with the oxygen remaining in the cathode offgas in the cathode offgas line. It is possible to reduce the amount of the oxygen in the cathode offgas and increase the amount of the water in the cathode offgas by the combustion. It is also possible then to increase the amount of the water in the cathode offgas, by mixing the cathode offgas with the water in the anode offgas in the cathode offgas line.

It is thus possible to feed the cathode offgas previously adjusted to have an oxygen amount smaller than the water content into the reforming reaction channel.

It is also possible then to reduce the flow rate of the cathode offgas sent to the reforming reaction channel by using the exhaust three-way regulating valve. It is possible then to adjust the amounts of water and oxygen sent to the reforming reaction channel and the ratio thereof properly, by adjusting the amount of the gas discharged through the exhaust three-way regulating valve and the mixing rate of the anode offgas.

Alternatively, the fuel cell system may be configured to mix part of the hydrogen-containing reformed gas into the cathode offgas line (Claim 18).

In such a case, it is possible to combust the hydrogen in the hydrogen-containing reformed gas with the oxygen in the cathode offgas in the cathode offgas line. It is thus possible to reduce the amount of the oxygen in the cathode offgas and increase the amount of the water in the cathode offgas by the combustion. It is thus possible to feed the cathode offgas previously adjusted to have an oxygen amount smaller than the water content into the reforming reaction channel.

It is also possible then to reduce the flow rate of the cathode offgas sent to the reforming reaction channel by using the exhaust three-way regulating valve. It is possible then to adjust the amounts of water and oxygen sent to the reforming reaction channel and the ratio thereof properly by adjusting the amount of the gas discharged through the exhaust three-way regulating valve and the mixing rate of the hydrogen-containing reformed gas.

It is also possible then to increase the hydrogen concentration in the hydrogen-containing reformed gas generated in the reforming reaction channel because of resupplying part of the hydrogen-containing reformed gas to the reforming reaction channel.

Yet alternatively, the fuel cell system may be configured to mix hydrogen into the cathode offgas line (Claim 19).

In such a case, it is possible combust the hydrogen with the oxygen in the cathode offgas in the cathode offgas line. It is possible to reduce the amount of the oxygen in the cathode offgas and increase the amount of the water in the cathode offgas by the combustion. It is thus possible to send the cathode offgas previously adjusted to have an oxygen amount smaller than the water content into the reforming reaction channel.

It is also possible then to reduce the flow rate of the cathode offgas sent to the reforming reaction channel by using the exhaust three-way regulating valve. It is possible then to adjust the amounts of water and oxygen sent to the reforming reaction channel and the ratio thereof properly by adjusting the amount of the gas discharged through the exhaust three-way regulating valve and the mixing rate of the hydrogen.

It is also possible then to supply not only the cathode offgas but also hydrogen into the reforming reaction channel and increase the hydrogen concentration in the hydrogen-containing reformed gas generated in the reforming reaction channel further more.

In the second invention, the cathode offgas line sends the cathode offgas into the reforming reactor channel directly, not via a mixer mixing the cathode offgas only with the reforming fuel or a mixer mixing the cathode offgas only with the reforming fuel and steam (Claim 20).

The second invention includes an embodiment of sending the cathode offgas to the reforming reactor channel without a mixer, and an embodiment of the cathode offgas line being connected to a mixer mixing the cathode offgas with the reforming fuel or with the reforming fuel and steam, as well as, for example, with air, anode offgas, the reformer exhaust EGR gas, and others.

In the embodiment of the cathode offgas line sending the cathode offgas without a mixer into the reforming reactor channel, it is possible to make the structure of the fuel cell including pipings simpler and eliminate the energy loss due to use of such devices.

When the cathode offgas line is connected to a mixer mixing cathode offgas with the reforming fuel or with the reforming fuel and steam, as well as, for example, with air, anode offgas, the reformer exhaust EGR gas, and others, it is possible to increase the efficiencies of using the hydrogen, heat and reforming fuel and the thermal efficiency of the fuel cell by providing the oxygen needed for partial oxidation, for example, by supplying air through the air line via the mixer into the reformer or the anode offgas and the exhaust EGR gas via the mixer, even when the amount of the oxygen in the cathode offgas is insufficient. Accordingly, it is possible to improve the reaction efficiency in the reformer, the efficiency of using the fuel and others, and the energy efficiency of the fuel cell system further more.

Preferably in the second invention, the reformer has a heat exchange channel formed close to the reforming reaction channel that heats the reforming reaction channel by combustion; the fuel cell has a refrigerant channel for feeding an oxygen-containing refrigerant gas for cooling the fuel cell; and the reforming reaction channel is heated by feeding the anode offgas discharged from the anode channel and the refrigerant offgas discharged from the refrigerant channel into the heat exchange channel, and combusting the anode offgas with the refrigerant offgas in the heat exchange channel (Claim 21).

In such a case, it is possible to combust the hydrogen contained in the anode offgas with the oxygen contained in the refrigerant offgas in the heat exchange channel and also to carry out combustion by using the high-temperature heat energy of the anode offgas and the heat energy of the refrigerant offgas. It is also possible to generate the hydrogen-containing reformed gas in the reforming reaction channel, by using the high-temperature heat energy of the cathode offgas. It is thus possible to generate electricity by making the most of the energies respectively of the cathode offgas, anode offgas and refrigerant offgas and to improve the energy efficiency of the fuel cell system more further more.

Hereinafter, examples of the fuel cell system and the method of generating electricity thereby will be described with reference to drawings. Please note that Examples 1 to 4 represent background art that is useful for understanding the invention, and Example 5 is an embodiment of the invention.

### Example 1

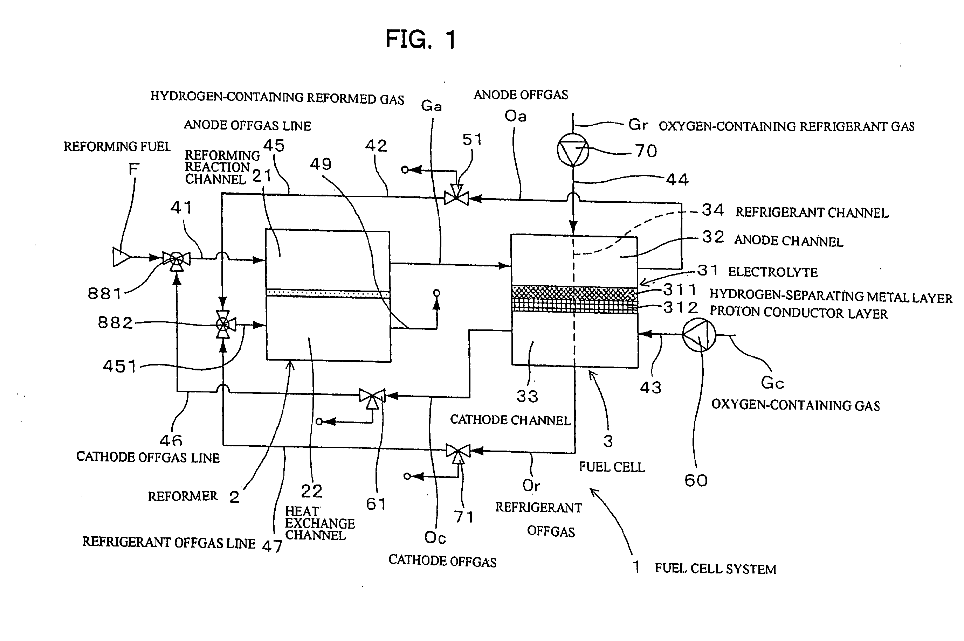

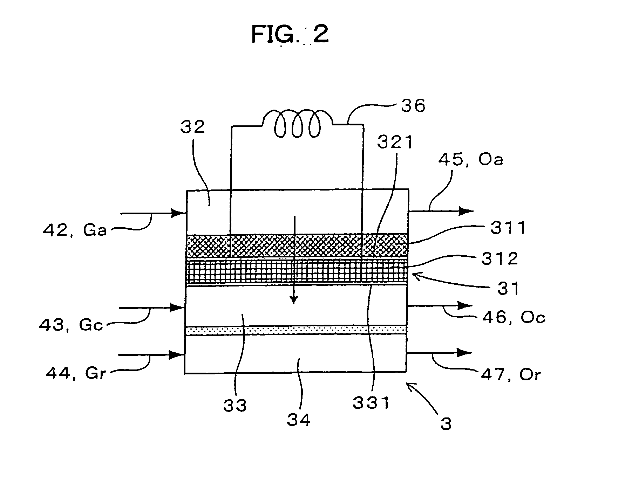

As shown in Figures 1 and 2, the fuel cell system 1 in the present Example has a reformer 2 generating a hydrogen-containing reformed gas Ga containing hydrogen from a reforming fuel F of hydrocarbon fuel and a fuel cell 3 generating electricity by using the hydrogen-containing reformed gas Ga generated in the reformer 2.

The reformer 2 has a reforming reaction channel 21 generating the hydrogen-containing reformed gas Ga from the reforming fuel F and a heat exchange channel 22 placed close to the reforming reaction channel 21 and heating the reforming reaction channel 21 by combustion.

As shown in Figure 2, the fuel cell 3 has an anode channel 32 to which the hydrogen-containing reformed gas Ga is supplied from the reforming reaction channel 21, a cathode channel 33 to which an oxygen-containing gas Gc is supplied, an electrolyte 31 installed between the cathode channel 33 and the anode channel 32, and a refrigerant channel 34 to which an oxygen-containing refrigerant gas Gr for cooling the fuel cell 3 is supplied.

The electrolyte 31 is a laminate of a hydrogen-separating metal layer (hydrogen-permeating metal layer) 311 allowing permeation of the hydrogen in the hydrogen-containing reformed gas Ga supplied to the anode channel 32 and a proton conductor layer 312, which is made of a ceramics material, converting the hydrogen permeating the hydrogen-separating metal layer 311 into the proton state and thus permeating it into to the cathode channel 33.

As shown in Figure 1, the fuel cell system 1 has a cathode offgas line 46 for feeding the cathode offgas Oc discharged from the cathode channel 33 into the reforming reaction channel 21 of the reformer 2, an anode offgas line 45 for feeding the anode offgas Oa discharged from the anode channel 32 to the heat exchange channel 22, and a refrigerant offgas line 47 for feeding the refrigerant offgas Or discharged from the refrigerant channel 34 to the heat exchange channel 22.

The reformer 2 is configured to generate the hydrogen-containing reformed gas Ga in reaction between the reforming fuel F and the cathode offgas Oc in the reforming reaction channel 21. The reformer 2 is also configured to generate the heat for heating by combustion of the anode offgas Oa and the refrigerant offgas Or in the heat exchange channel 22.

Hereinafter, the fuel cell system will be described in detail.

As shown in Figures 1 and 2, the hydrogen-separating metal layer 311 in the present Example is a laminated metal of palladium (Pd) and vanadium (V). The hydrogen-separating metal layer 311 may be made only of palladium or of the alloy containing the same. The hydrogen-separating metal layer 311 has a hydrogen-permeating potential (hydrogen-separating potential) of equivalent to more than 10 A/cm<2> as electric current density under an anode gas-feeding condition of 3 atmospheric pressures. Thus, the electric resistance of the hydrogen-separating metal layer 311 is made as small as negligible.

Alternatively, the proton conductor layer 312 in the present Example is made of a ceramic perovskite oxide. The electric resistance of the proton conductor layer 312 is as small as that of solid polyelectrolyte membranes. Examples of the perovskite oxides include BaCeO3 -based and SrCeO3 -based oxides.

As shown in Figure 2, the electrolyte 31 has an anode electrode 321 (anode) formed on the anode channel 32-sided surface of the proton conductor 312 and a cathode electrode 331 (cathode) formed on the cathode channel 33-sided surface of the proton conductor layer 312. A cell output cable 36 for outputting the power from the fuel cell 3 is connected between the anode electrode 321 and the cathode electrode 331.

The anode electrode 321 in the proton conductor layer 312 of the present Example is made of palladium, which also constitutes the hydrogen-separating metal layer 311. Alternatively, the cathode electrode 331 in the proton conductor layer 312 of the present Example is made of a Pt-based electrode catalyst. The anode electrode 321 may be made of a Pt-based electrode catalyst.

In the present Example, as shown in Figure 1, a cathode offgas three-way regulating valve 61as a three-way exhaust-gas regulating valve dividing the cathode offgas Oc flowing therein into two streams is formed on the cathode offgas line 46. The fuel cell system 1 is configured to discharge part of the cathode offgas Oc flowing in the cathode offgas line 46 and feed the other offgas into the reforming reaction channel 21 of the reformer 2 via the cathode offgas three-way regulating valve 61. The cathode offgas three-way regulating valve 61 can adjust the distribution ratio, i.e., the ratio of the flow rate of the cathode offgas Oc discharged to the flow rate of the cathode offgas Oc fed into the reforming reaction channel 21. It can also adjust the flow rated of cathode offgas Oc fed from the cathode offgas line 46 into the reforming reaction channel 21 of the reformer 2 with the cathode offgas three-way regulating valve 61.

Thus it is possible to keep the amount of the oxygen remaining in the cathode offgas Oc sent to the reforming reaction channel 21 in a desirable range by discharging part of the cathode offgas Oc via the cathode offgas three-way regulating valve 61, when the oxygen amount in the cathode offgas Oc (amount of oxygen remaining unconsumed in the reaction in fuel cell 3) is larger than the oxygen amount needed for the reforming reaction channel 21. Each of the three-way regulating valves used in the present Example is a branching valve having an inlet port introducing a gas, an outlet port discharging the gas and a relief port. The branching valve in the present Example can adjust the distribution ratio of the flow rates of the gasses respectively passing through the outlet port and the relief port. Three-way regulating valves described below are also the same.

When the flow rate of the hydrogen-containing reformed gas Ga into the anode channel 32, flow rate of the oxygen-containing gas Gc into the cathode channel 33, or the like changes, and thus, when the ratio of the theoretical air quantity with respect to the amount of the proton in the cathode channel 33 (cathode stoichiometry) changes, the amount of oxygen remaining in the cathode offgas Oc unconsumed in the reaction with proton also varies. It is possible then to reduce the flow rate of the cathode offgas Oc sent to the reforming reaction channel 21 by discharging part of the cathode offgas Oc via the cathode offgas three-way regulating valve 61, especially when the remaining oxygen amount is greater than the oxygen amount needed for the reforming reaction channel 21. Thus, it is possible to keep the amount of oxygen remaining in the cathode offgas Oc sent to the reforming reaction channel 21 in a desirable range.

In the fuel cell system 1, it is also possible to change the cathode stoichiometry intentionally, by changing the flow rate of the hydrogen-containing reformed gas Ga into the anode channel 32, the flow rate of the oxygen-containing gas Gc into the cathode channel 33, or the like. It is then possible to adjust the ratio of the amount of water (water content) generated by the reaction between proton and oxygen in the cathode offgas Oc to the amount of the remaining oxygen. Even at the time, it is possible to keep the amount of oxygen remaining in the cathode offgas Oc sent to the reforming reaction channel 21 in a desirable range, by discharging part of the cathode offgas Oc via the cathode offgas three-way regulating valve 61.

As shown in Figure 1, an anode offgas three-way regulating valve 51 for branching the anode offgas Oa flowing therein into two streams is formed on the anode offgas line 45 in the present Example. The fuel cell system 1 is configured to discharge part of the anode offgas Oa flowing in the anode offgas line 45 and feed the other offgas into the heat exchange channel 22 of the reformer 2 via the anode offgas three-way regulating valve 51. The anode offgas three-way regulating valve 51 can also adjust the distribution ratio of the flow rate of the discharged anode offgas Oa to the flow rate of the anode offgas Oa sent to the heat exchange channel 22. It is possible to adjust the flow rate of the anode offgas Oa sent from the anode offgas line 45 to the heat exchange channel 22 of the reformer 2 with the anode offgas three-way regulating valve 51.

In this way, it is possible to keep the amount of hydrogen remaining in the anode offgas Oa sent into the heat exchange channel 22 in a suitable range by discharging part of the anode offgas Oa via the anode offgas three-way regulating valve 51, when the amount of hydrogen in the anode offgas Oa (amount of remaining hydrogen impermeable through the hydrogen-separating metal layer 311 in the electrolyte 31 of fuel cell 3) is larger than the amount of hydrogen needed for the heat exchange channel 22.

As shown in Figure 1, a refrigerant-offgas three-way regulating valve 71 for branching the refrigerant offgas flowing therein into two streams is placed on the refrigerant offgas line 47 in the present Example.

The fuel cell system 1 is configured to discharge part of the refrigerant offgas Or flowing in the refrigerant offgas line 47 and feed the other offgas into the heat exchange channel 22 of the reformer 2 via the refrigerant-offgas three-way regulating valve 71. The refrigerant-offgas three-way regulating valve 71 can also adjust the distribution ratio of the flow rate of the refrigerant offgas Or discharged to the flow rate of the refrigerant offgas Or sent to the heat exchange channel 22.

It is thus possible to adjust the flow rate of the refrigerant offgas Or sent from the refrigerant offgas line 47 to the heat exchange channel 22 of the reformer 2, with the refrigerant-offgas three-way regulating valve 71. In this manner, it is possible to keep the amount of oxygen remaining in the refrigerant offgas Or sent to the heat exchange channel 22 in a desirable range by discharging part of the refrigerant offgas Or via the refrigerant-offgas three-way regulating valve 71, when the amount of oxygen in the refrigerant offgas Or is larger than the amount of oxygen needed for the heat exchange channel 22.

As shown in Figure 1, the fuel cell system 1 has a fuel feed line 41 for feeding the reforming fuel F into the reforming reaction channel 21 of the reformer 2. The cathode offgas line 46 is connected to the fuel feed line 41, and a reaction-channel mixing valve 881 for mixing the cathode offgas flowing in the cathode offgas line 46 with the reforming fuel F flowing in the fuel feed line 41 is formed in the connection portion. And, the mixed gas of reforming fuel F and cathode offgas Oc is fed to the reforming reaction channel 21 in the reformer 2.

The cathode offgas line 46 may be connected directly to the reforming reaction channel 21, and the cathode offgas Oc and the reforming fuel F may be mixed in the reforming reaction channel 21.

In the reforming reaction channel 21, a steam reforming reaction occurs between the reforming fuel F and the water contained in the cathode offgas Oc (high-temperature steam), generating hydrogen, carbon monooxide, and others. A partial oxidation reaction also occurs by the reforming fuel F and the oxygen contained in the cathode offgas Oc in the reforming reaction channel 21, generating water, carbon monooxide, carbon dioxide, and others. As a result, the hydrogen-containing reformed gas Ga containing hydrogen, water, and others, is generated in the steam reforming and partial oxidation reactions.

The steam reforming reaction is an endothermic reaction, while the partial oxidation reaction is an exothermic reaction; and thus, it is possible to reduce the temperature drop of the reforming reaction channel 21 by the partial oxidation reaction.

As shown in Figure 1, in the fuel cell system 1 of the present Example, the anode offgas line 45 and the refrigerant offgas line 47 are connected to a gas mixing line for heating 451 communicating with the heat exchange channel 22 of the reformer 2. And, a heating-channel mixing valve 882 for mixing the anode offgas Oa flowing in the anode offgas line 45 and the refrigerant offgas Or flowing in the refrigerant offgas line 47 is installed in the connection portion. The mixed gas of the anode offgas Oa and the refrigerant offgas Or is fed to the heat exchange channel 22 of the reformer 2.

The anode offgas line 45 and refrigerant offgas line 47 may respectively connected directly to the heat exchange channel 22, and in the anode offgas Oa and the refrigerant offgas Or may be mixed in the heat exchange channel 22.

A combustion reaction between the hydrogen contained in the anode offgas Oa and the oxygen contained in the refrigerant offgas Or proceeds in the heat exchange channel 22, generating water and others.

It is thus possible to keep the temperature in the reforming reaction channel 21 high, by the combustion reaction in the heat exchange channel 22 and transmission of the heat from the heat exchange channel 22 to the reforming reaction channel 21. In the present Example, the temperature of the hydrogen-containing reformed gas Ga generated in the reformer 2 is kept in a certain temperature range, by balancing the quantity of the heat generated by the steam reforming and partial oxidation reactions in the reforming reaction channel 21 practically with the quantity of the heat generated by the combustion reaction in the heat exchange channel 22.

The combustion offgas after combustion reaction in the heat exchange channel 22 is discharged out of the fuel cell system 1 through an exhaust line 49 connected to the outlet of the heat exchange channel 22.

It is also possible to reduce the rate of the partial oxidation reaction conducted in reforming reaction channel 21 by forming a heat exchange channel 22 in the reformer 2. Thus, it is possible to use the reforming fuel F more for the steam reforming reaction, generating hydrogen in the reforming reaction channel 21 and to reduce the feed rate of the reforming fuel F to the reforming reaction channel 21.

As shown in Figure 1, the reforming reaction channel 21 in the reformer 2 and the anode channel 32 in the fuel cell 3 are connected to each other, via a reformed-gas feed line 42 in which the hydrogen-containing reformed gas Ga generated in the reforming reaction channel 21 is flowing.

In addition, the cathode channel 33 in the fuel cell 3 is connected to an oxygen-containing gas feed line 43 feeding an oxygen-containing gas Gc to the cathode channel 33. In the present Example, the oxygen-containing gas Gc is air, and an oxygen-containing gas pressurizer 60 feeding air, the oxygen-containing gas Gc, under pressure is installed on the oxygen-containing gas feed line 43. The oxygen-containing gas pressurizer 60 is a pump 60 in the present Example. The oxygen-containing gas pressurizer 60 may be a fan, compressor, ejector, or the like.

For example, oxygen may be used instead of air as the oxygen-containing gas Gc.

In addition, a refrigerant gas feed line 44 for supplying an oxygen-containing refrigerant gas Gr into the refrigerant channel 34 is connected to the refrigerant channel 34 of the fuel cell 3. The oxygen-containing refrigerant gas Gr in the present Example is air, and a refrigerant gas pressurizer 70 for applying pressure to the oxygen-containing refrigerant gas Gr air and feeding it is installed on the refrigerant gas feed line 44. It is possible to keep the temperature in the fuel cell 3 in a suitable temperature range, by adjusting the feed rate of the oxygen-containing refrigerant gas Gr to the refrigerant channel 34 of fuel cell 3 with the refrigerant gas pressurizer 70.

The refrigerant gas pressurizer 70 in the present Example is a pump 70. However, the refrigerant gas pressurizer 70 may be a fan, compressor, ejector, or the like.

The fuel cell system 1 is configured to supply the hydrogen-containing reformed gas Ga directly from the reforming reaction channel 21 of the reformer 2 to the anode channel 32 of the fuel cell 3 without a heat exchanger, condenser, or the like. The fuel cell system 1 is configured to supply the cathode offgas Oc from cathode channel 33 of fuel cell 3 to the reforming reaction channel 21 in the reformer 2 directly without a heat exchanger or the like.

One reforming reaction channel 21 and one heat exchange channel 22 are formed in the reformer 2 shown in Figure 1. However, the reformer 2 may have respectively multiple reforming reaction channels 21 and heat exchange channels 22 that are installed alternately.

The fuel cell 3 shown Figures 1 or 2 has an anode channel 32, a cathode channel 33 and a refrigerant channel 34. However, the fuel cell 3 may have respectively multiple anode channels 32, cathode channels 33 and refrigerant channels 34 that are installed alternately.

Hereinafter, the method of generating electricity by using the fuel cell system 1 and the operational advantages of the fuel cell system 1 will be described.

In the present Example, the hydrogen-containing reformed gas Ga is generated in reaction of the reforming fuel F fed through the fuel feed line 41 with the cathode offgas Oc fed through the cathode offgas line 46 in the reforming reaction channel 21 the reformer 2. Alternatively in the heat exchange channel 22 of the reformer 2, heat is generated in reaction of the anode offgas Oa fed through the anode offgas line 45 with the refrigerant offgas Or fed through the refrigerant offgas line 47, and the heat exchange channel 22 heats the reforming reaction channel 21. In this manner, it is possible to generate the hydrogen-containing reformed gas Ga in the reforming reaction channel 21 and keep the temperature of the hydrogen-containing reformed gas Ga fed from the reforming reaction channel 21 to the anode channel 32 of the fuel cell 3 at a high temperature of 300 to 600°C by heating from the heat exchange channel 22.

The temperature of the hydrogen-containing reformed gas Ga generated in the reformer 2 may be 300 to 600°C, but is more preferably 400 to 500°C. In such a case, it is possible to keep the temperature of the hydrogen-separating metal layer 311 in the electrolyte 31 of fuel cell 3 in the temperature range most suitable for showing its favorable hydrogen-permeating potential, and prevent, for example, deterioration of the hydrogen-separating metal layer 311 easily.

The hydrogen-containing reformed gas Ga generated in the reforming reaction channel 21 of the reformer 2 is supplied, into the anode channel 32 of the fuel cell 3. Most of the hydrogen in the hydrogen-containing reformed gas Ga supplied to the anode channel 32 penetrates through the hydrogen-separating metal layer 311 of the electrolyte 31 and reaches the proton conductor layer 312 of the electrolyte 31. The hydrogen penetrates through proton conductor layer 312 in the proton state.

In the cathode channel 33, water is generated in reaction of the proton with oxygen in the oxygen-containing gas Gc supplied from the oxygen-containing gas feed line 43. In the present Example, the reaction in the fuel cell 3 is carried out at a high temperature of 300 to 600°C and the water generated becomes high-temperature steam.

The fuel cell system 1 generates electricity by withdrawing electricity from the anode electrode 321 and the cathode electrode 331 of electrolyte 31 into the cell output cable 36 during the reaction.

The fuel cell system 1 in the present Example has a fuel cell 3 having an electrolyte 31 of a laminate of the hydrogen-separating metal layer 311 and the proton conductor layer 312. It is possible to operate the fuel cell 3 at a high temperature, for example of 300 to 600°C in the fuel cell system 1 in the present Example, because the proton conductor layer 312 is made of a ceramic material and can be used without being impregnated with water. It is thus possible to supply the hydrogen-containing reformed gas Ga directly from the reformer 2 to the fuel cell 3.

It is also possible to feed the cathode offgas Oc discharged from the cathode channel 33 directly into the reformer 2 at a high-temperature state close to the operational temperature of the fuel cell 3. Accordingly in the fuel cell system 1, it is possible to make the temperature at which the hydrogen-containing reformed gas Ga is generated in the reformer 2, close to the operational temperature of fuel cell 3.

The cathode offgas Oc discharged from the cathode channel 33 after reaction in the cathode channel 33 has oxygen unconsumed in the reaction (residual oxygen), water generated in the reaction (generated water), and heat due to the high-temperature operation of fuel cell 3.

The water generated in the cathode channel 33 of the fuel cell 3 is heated to a high-temperature steam, for example, at 300 to 600°C, and the generated water does not moisten the proton conductor layer 312 and does not penetrate from the cathode channel 33 to the anode channel 32, because the hydrogen-separating metal layer 311 allows only permeation of hydrogen. Thus, it is possible to recover all of the generated water from the cathode channel 33 via the cathode offgas line 46.

In this manner, it is possible to obtain the water needed for reaction in the reforming reaction channel 21 of the reformer 2 from the cathode offgas Oc containing the water generated in electrical power generation in the fuel cell 3 easily and to supply a sufficient amount of water to the reforming reaction channel 21 in the fuel cell system 1. It is also possible to adjust the amount of water supplied to the reforming reaction channel 21 in the fuel cell system 1, by using all of the generated water in the cathode offgas Oc.

It is thus possible to adjust the operational condition of the fuel cell system 1 and stabilize the operation of the fuel cell system 1 easily.

It is also possible to prevent deposition of the components of the proton conductor layer 312 in the generated water in the cathode channel 33 by vaporization in the fuel cell 3, because the proton conductor layer 312 is used as it is dry. It is thus possible to prevent deterioration in purity of the generated water in the cathode offgas Oc sent to the reformer 2 and avoid the problem of poisoning of the reforming catalyst for the steam reforming reaction placed in the reforming reaction channel 21 of the reformer 2.

Accordingly in the fuel cell system 1, it is possible to use not only the residual oxygen and a sufficient amount of generated water contained in the cathode offgas Oc but also the high-temperature heat energy of the cathode offgas Oc in the reforming reaction channel 21, when the hydrogen-containing reformed gas Ga is generated in reaction of the reforming fuel F and the cathode offgas Oc in the reforming reaction channel 21 of the reformer 2. It is thus possible to generate the hydrogen-containing reformed gas Ga in reaction of the reforming fuel F with the cathode offgas Oc having the high-temperature heat energy in the reforming reaction channel 21 and to improve the energy efficiency of the reforming reaction channel 21.

The anode offgas Oa discharged from the anode channel 32 has the hydrogen discharged unpermeated through the hydrogen-separating metal layer 311 of the electrolyte 31, the substances other than hydrogen contained in the hydrogen-containing reformed gas Ga, and the heat quantity of fuel cell 3 under high-temperature operation. Alternatively, the refrigerant offgas Or discharged from the refrigerant channel 34 has the oxygen contained in the oxygen-containing refrigerant gas Gr and the heat energy generated in the fuel cell 3.

Accordingly when the anode offgas Oa is supplied from the anode channel 32 via the anode offgas line 45 to the heat exchange channel 22 and the refrigerant offgas Or from the refrigerant channel 34 via the refrigerant offgas line 47 to the heat exchange channel 22, it is possible to combust the hydrogen contained in the anode offgas Oa with the oxygen contained in the refrigerant offgas Or and also to carry out the combustion by using the high-temperature heat energies respectively of the anode offgas and the refrigerant offgas Or, in the heat exchange channel 22. Thus, it is possible to improve the energy efficiency in the heat exchange channel 22.

In the fuel cell system 1 of the present Example, it is also possible to make the temperature of the hydrogen-containing reformed gas Ga generated in the reformer 2 close to the operational temperature of the fuel cell 3, as described above. Consequently in the present Example, there is no need for installing devices needed when there is a difference in temperature between the reformer 2 and the fuel cell 3 such as heat exchanger, condenser, and the like. It is thus possible to eliminate the energy loss due to use of such additional devices and make the structure of the fuel cell system 1 simpler. For that reason, the fuel cell system 1 in the present Example allows simplification of its structure, recovery of all water generated in the cathode channel 33, and improvement in the energy efficiency of the fuel cell system 1, by using the high-temperature heat energies respectively of the cathode offgas Oc, anode offgas Oa and refrigerant offgas Or.

Although not shown in the Figures, water and oxygen (air, etc.) may be fed directly into the reforming reaction channel 21 in the reformer 2 and a fuel and oxygen (air, etc.) may be fed directly to the heat exchange channel 22 of the reformer 2 during startup of the fuel cell system 1.

After startup of the fuel cell system 1, the water and oxygen needed for the reforming reaction channel 21 can be supplied only from the cathode offgas Oc, and the fuel hydrogen and oxygen needed for the heat exchange channel 22 can be supplied only from the anode offgas Oa and the refrigerant offgas Or.

It is also possible to vaporize the reforming fuel F supplied to the reforming reaction channel 21 smoothly in the reforming reaction channel 21 of the reformer 2, with the high-temperature cathode offgas Oc.

In addition, the hydrogen-separating metal layer 311 is almost free from the poisoning by carbon monooxide or the like, when the fuel cell 3 in the present Example is operated at high temperature, for example, of 300 to 600°C. Accordingly, it is possible to supply hydrogen as well as the hydrogen-containing reformed gas Ga containing carbon monooxide and others directly into the anode channel 32 of fuel cell 3 during the high-temperature operation.

Part of the cathode offgas Oc unconsumed in the reforming reaction channel 21 in the reformer 2 is discharged out of the fuel cell system 1 in the present Example. However, part of the cathode offgas Oc unconsumed in the reforming reaction channel 21 can be used in other units other than the reforming reaction channel 21 in the fuel cell system 1, for example, as follows:

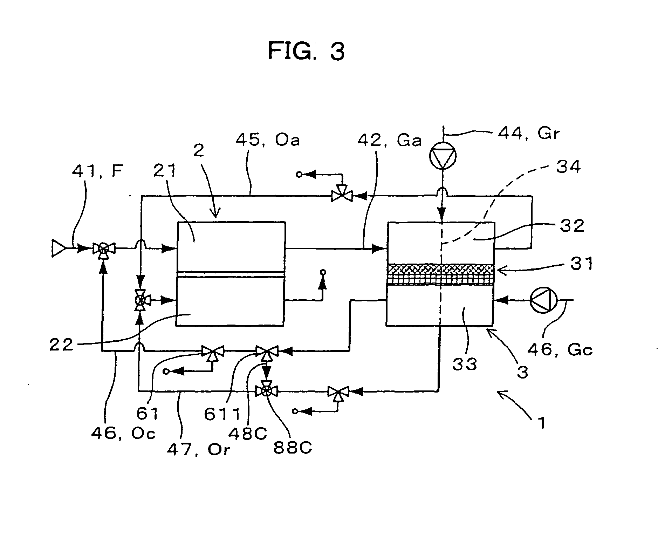

In a variation of using part of the cathode offgas Oc unconsumed in the reforming reaction channel 21, the fuel cell system 1 supplies part of the cathode offgas Oc flowing in the cathode offgas line 46 via supply three-way regulating valve 611 to the heat exchange channel 22 of the reformer 2 and the other offgas to the reforming reaction channel 21, as shown in Figure 3.

Specifically, the relief port of the supply three-way regulating valve 611 placed on the cathode offgas line 46 is connected to the refrigerant offgas line 47 via a cathode offgas mixing line 48C, and a cathode offgas-refrigerant offgas mixing valve 88C is installed in the connection portion. And, part of the cathode offgas Oc flowing in the cathode offgas line 46 is mixed with the refrigerant offgas Or flowing in the refrigerant offgas line 47.

In such a case, part of the cathode offgas Oc not needed for the reforming reaction channel 21 can be used for combustion in the heat exchange channel 22. It is thus possible to improve the energy efficiency of the fuel cell system 1.

In such a case, the cathode offgas three-way regulating valve 61 may be place on the cathode offgas line 46, and it is also possible to reduce the flow rate of the cathode offgas Oc sent to the reforming reaction channel 21 with the cathode offgas three-way regulating valve 61.

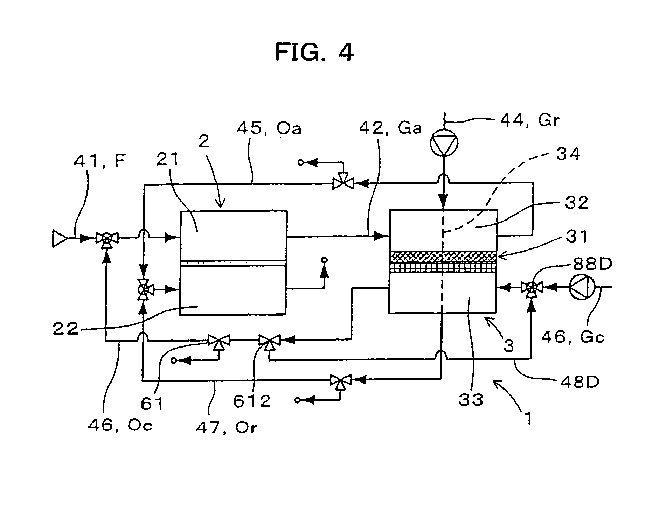

In another variation of using part of the cathode offgas Oc unconsumed in the reforming reaction channel 21, the fuel cell system 1 resupplies part of the cathode offgas Oc flowing in the cathode offgas line 46 to the cathode channel 33 via a resupply three-way regulating valve 612 and the other offgas to the reforming reaction channel 21, as shown in Figure 4.

Specifically, the relief port of the resupply three-way regulating valve 612 placed on the cathode offgas line 46 is connected to the oxygen-containing gas feed line 43 via a cathode offgas mixing line 48D, and a cathode offgas-oxygen-containing gas mixing valve 88D is installed in the connection portion. Part of the cathode offgas Oc flowing in the cathode offgas line 46 can be mixed with the oxygen-containing gas Gc flowing in the oxygen-containing gas feed line 43.

It is possible then to adjust or reduce the oxygen concentration of the oxygen-containing gas Gc supplied to the cathode channel 33, by resupplying part of the cathode offgas Oc not needed for the reforming reaction channel 21 to the cathode channel 33.

The cathode offgas three-way regulating valve 61 may be installed on cathode offgas line 46 also in such a case. It is possible to determine the amount of water supplied to the reforming reaction channel 21 by adjusting the flow rate with the cathode offgas three-way regulating valve 61 and the amount of oxygen supplied to the reforming reaction channel 21 by adjusting the re-feed rate to the cathode channel 33 with the resupply three-way regulating valve 612. In this way, it is possible to control the amounts of the water and oxygen sent to the reforming reaction channel 21 and the ratio thereof properly.

The ratio S/C of the mole amount of the water (S) in the cathode offgas Oc to the mole amount of the carbon (C) in the reforming fuel F is, for example, 1 to 3 in the reforming reaction channel 21 of the reformer 2. The ratio O/C of the mole amount of the oxygen (O) in the cathode offgas Oc to the mole amount of the carbon (C) in the reforming fuel F is, for example, 0 to 1.0 in the reforming reaction channel 21 of the reformer 2.

It may be considered to be effective to increase the flow rate of the hydrogen-containing reformed gas Ga into the anode channel 32 and thus the amount of water generated by electrical power generation in the fuel cell 3, to increase the amount of water sent to the reforming reaction channel 21 of the reformer 2. However, the increase in the flow rate of the hydrogen-containing reformed gas Ga results in use of the reforming fuel F in a greater amount, and thus, drop in energy efficiency. In addition, for improvement in energy efficiency, a greater amount of water is demanded for the steam reforming reaction, because of the increase in amount of the reforming fuel F.

The fact indicates that it is important to recover all of the water generated in electrical power generation in the fuel cell 3 from the cathode channel 33, for keeping the energy efficiency of fuel cell system 1 high.

It is also possible to increase the S/C ratio more easily, by adjusting the amount of water supplied to the reforming reaction channel 21 of the reformer 2 by using all of the water generated by electrical power generation in the fuel cell 3. In this way, it becomes easier to widen the favorable S/C range in the reforming reaction channel 21 of the reformer 2 and adjust the operational condition of the fuel cell system 1.

### Example 2

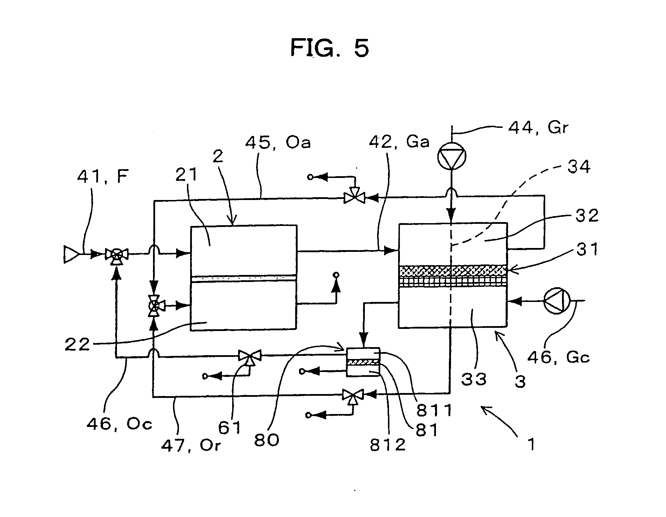

The present shown in Figures 5 to 8 is a variation in which the O/C ratio (oxygen (O) to carbon (C) by mole) and the S/C ratio (water (S) to carbon (C) by mole) in the reforming reaction channel 21 of the reformer 2 are adjusted by installing an oxygen-separating membrane 81 on the cathode offgas line 46 for reducing the oxygen concentration in the cathode offgas Oc.

The oxygen-separating membrane 81 is formed on the cathode offgas line 46 inside the oxygen-separating membrane device 80. The oxygen-separating membrane device 80 has an oxygen-separating membrane 81 allowing permeation of the oxygen in the cathode offgas Oc and two channels 811 and 812 separated by the oxygen-separating membrane 81. The two channels 811 and 812 are respectively an offgas channel 811 to which the cathode offgas Oc discharged from the cathode channel 33 is fed and an oxygen permeation channel 812 through which oxygen permeated through the oxygen-separating membrane 81 is flowing.

The oxygen-separating membrane 81 is made, for example, of a silicon membrane, a vinyl aromatic amine polymer, meso-tetrakisporphinato-cobalt, polyphenylene oxide, or the like.

In addition, a cathode offgas three-way regulating valve 61 is installed on the cathode offgas line 46 in the present Example.

As shown in Figure 5, the fuel cell system 1 is configured to discharge the oxygen permeated through the oxygen-separating membrane 81 out of the fuel cell system 1. It is thus possible to reduce the oxygen amount in the cathode offgas Oc (the remaining oxygen amount) and keep the oxygen amount in the cathode offgas Oc sent to the reforming reaction channel 21 in a desirable range.

In such a case, it is possible to determine the amount of water sent to the reforming reaction channel 21 by adjusting the amount of the cathode offgas Oc discharged from the cathode offgas three-way regulating valve 61. It is also possible to determine the amount of the oxygen sent to the reforming reaction channel 21 by adjusting the amount of the oxygen discharged through the oxygen-separating membrane 81. Thus, it is possible to adjust the amounts of the water and oxygen sent to the reforming reaction channel 21 and the ratio thereof properly and the O/C and S/C ratios in the reforming reaction channel 21 properly.

In addition, the oxygen permeated through the oxygen-separating membrane 81 placed on the cathode offgas line 46 may be used in units other than the reforming reaction channel 21 in the fuel cell system 1, as described below.

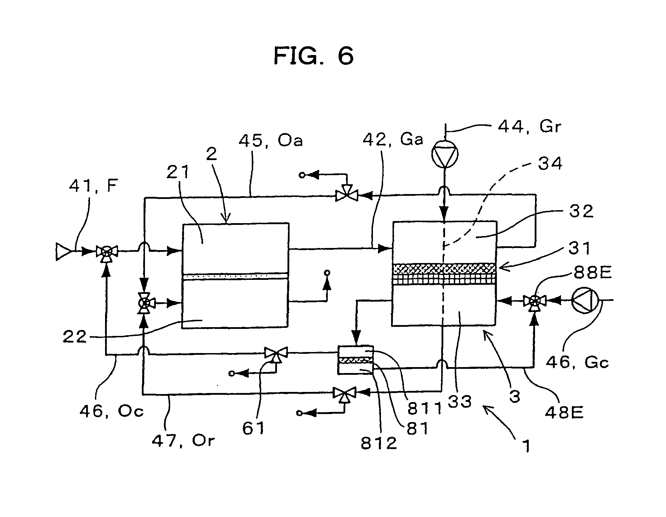

As shown in Figure 6, in a variation in which the oxygen in the cathode offgas Oc is used in units other than the reforming reaction channel 21, the fuel cell system 1 may be configured to resupply the oxygen permeated through the oxygen-separating membrane 81 into the cathode channel 33 of the fuel cell 3.

Specifically, the oxygen permeation channel 812 in the oxygen-separating membrane device 80 placed on the cathode offgas line 46 is connected to the oxygen-containing gas feed line 43 via an oxygen mixing line 48E, and an oxygen-oxygen-containing gas mixing valve 88E is installed in the connection portion. Thus, the oxygen permeated through the oxygen-separating membrane 81 can be mixed with the oxygen-containing gas Gc flowing in the oxygen-containing gas feed line 43.

As described above, it is also possible to adjust the amounts of the water and oxygen sent to the reforming reaction channel 21 and the ratio thereof properly and the O/C and S/C ratios in the reforming reaction channel 21 properly by adjusting the amount of the cathode offgas Oc discharged from the three-way regulating valve 61 and the oxygen discharged by the oxygen-separating membrane 81 in the case.

It is also possible then to increase the amount of the oxygen in the oxygen-containing gas Gc supplied to the cathode channel 33 by resupplying part of the oxygen in the cathode offgas Oc to the cathode channel 33. It is thus possible to raise the oxygen concentration easily, without changing the cathode stoichiometry (ratio of the theoretical air quantity to proton amount in the cathode channel 33).

It is also possible then to obtain the oxygen needed for the reaction in the fuel cell 3 easily. It is thus possible to reduce the cathode stoichiometry to a suitable ratio by reducing the flow rate of the oxygen-containing gas Gc supplied to the cathode channel 33. In this manner, it is possible to reduce the number of auxiliary power devices such as pump 60 placed on the oxygen-containing gas feed line 43 and improve the efficiency of the fuel cell system 1.

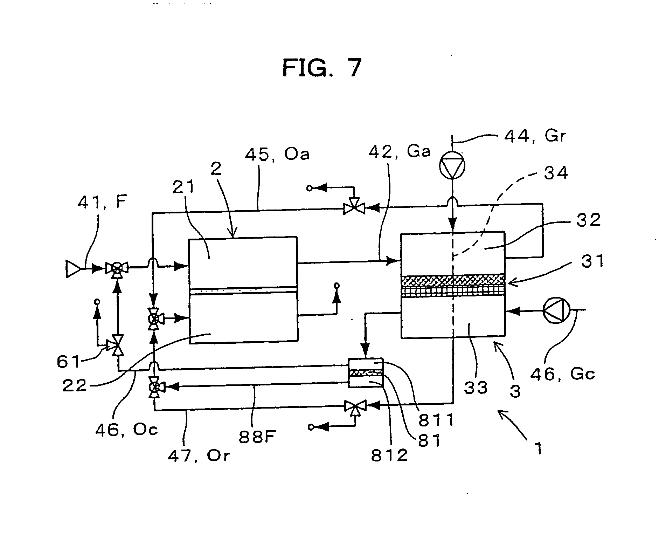

In another variation of using the oxygen in the cathode offgas Oc in other units other than the reforming reaction channel 21, the fuel cell system 1 may be configured to send the oxygen permeated through the oxygen-separating membrane 81 to the heat exchange channel 22 of the reformer 2, as shown in Figure 7.

Specifically, the oxygen permeation channel 812 in the oxygen-separating membrane device 80 placed on the cathode offgas line 46 is connected to the refrigerant offgas line 47 via an oxygen-refrigerant offgas mixing line 48F, and an oxygen-refrigerant offgas mixing valve 88F is installed in the connection portion. Thus, the oxygen permeated through the oxygen-separating membrane 81 can be mixed with the refrigerant offgas Or flowing in the refrigerant offgas line 47.

As described above, it is also possible the to adjust the amounts of the water and oxygen sent to the reforming reaction channel 21 and the ratio thereof and the O/C and S/C ratios in the reforming reaction channel 21 properly, by adjusting the cathode offgas Oc discharged from three-way regulating valve 61 and the amount of oxygen discharged by the oxygen-separating membrane 81.

In such a case, the oxygen obtained via the oxygen-separating membrane 81 may be used for combustion in the heat exchange channel 22. It is thus possible to use the oxygen in the cathode offgas Oc unconsumed in the reforming reaction channel 21 in the heat exchange channel 22 effectively and improve the energy efficiency of the fuel cell system 1 further.

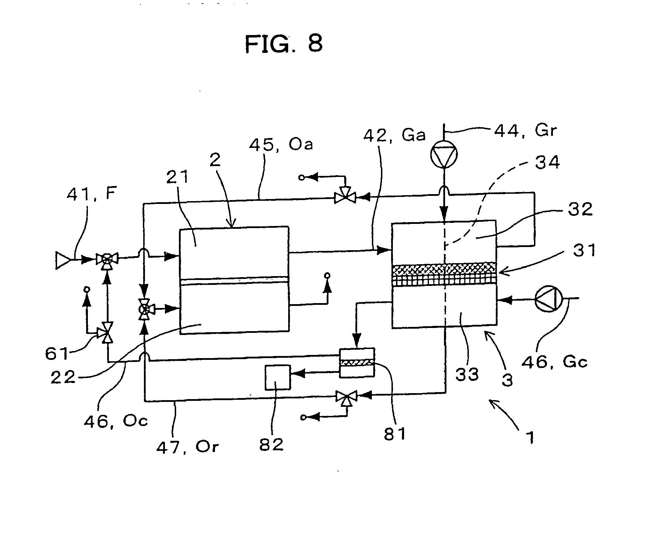

In yet another variation of using the oxygen in the cathode offgas Oc in other units other than the reforming reaction channel 21, the fuel cell system 1 may be configured to store the oxygen permeated through the oxygen-separating membrane 81 in an oxygen buffer 82, as shown in Figure 8.

As described above, it is also possible then to adjust the amounts of the water and oxygen sent to the reforming reaction channel 21 and the ratio thereof and the O/C and S/C ratios in the reforming reaction channel 21 properly, by adjusting the cathode offgas Oc discharged from three-way regulating valve 61 and the amount of oxygen discharged by the oxygen-separating membrane 81.

It is also possible then to store the oxygen in the cathode offgas Oc unconsumed in the reforming reaction channel 21 in the oxygen buffer 82. Accordingly, it is possible to supply the oxygen from the oxygen buffer 82 to the reforming reaction channel 21, for example, when the oxygen amount needed for the reforming reaction channel 21 is desirably increased. The oxygen buffer 82 represents, for example, an oxygen cylinder.

The other components in the present Example are the same as those in Example 1 above, and it is possible to obtaining operational advantages similar to those of Example 1 above.

### Example 3

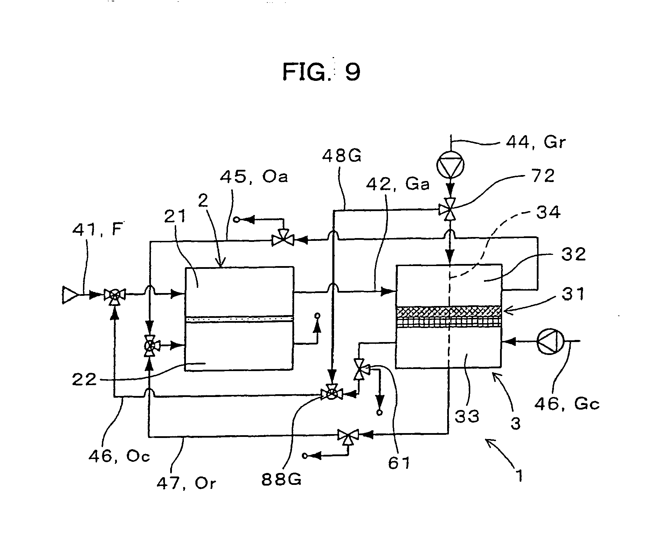

The Example shown in Figures 9 to 11 is another variation in which the O/C and S/C ratios are adjusted by feeding a particular oxygen-containing gas to the cathode offgas line 46 from a unit in the fuel cell system 1 or outside of the fuel cell system 1, for increase in the oxygen concentration in the reforming reaction channel 21.

In the present Example, the cathode offgas Oc and the particular gas are mixed in the cathode offgas line 46, and the cathode offgas Oc adjusted in oxygen concentration is then fed into the reforming reaction channel 21.

A cathode offgas three-way regulating valve 61 is also placed on the cathode offgas line 46 in the present Example.

In yet another variation, the fuel cell system 1 may be configured to mix part of the oxygen-containing refrigerant gas Gr sent to the refrigerant channel 34 with the cathode offgas Oc flowing in the cathode offgas line 46 and send the mixed gas thus obtained to the reforming reaction channel 21, as shown in Figure 9.

Specifically, a refrigerant-gas three-way regulating valve 72 is placed on the refrigerant gas feed line 44. The relief port of the refrigerant-gas three-way regulating valve 72 is connected to the cathode offgas line 46 via a refrigerant gas mixing line 48G, and a refrigerant gas-cathode offgas mixing valve 88G is installed in the connection portion. Part of the oxygen-containing refrigerant gas Gr flowing in the refrigerant gas flowing in the line 44 can be mixed with the cathode offgas Oc flowing in the cathode offgas line 46.

In such a case, it is possible to keep the oxygen amount in the cathode offgas Oc sent to the reforming reaction channel 21 in a desirable range, by increasing the oxygen amount in the cathode offgas Oc.

It is also possible then to determine the amount of water sent to the reforming reaction channel 21, by adjusting the amount of the cathode offgas Oc discharged from the cathode offgas three-way regulating valve 61. It is also possible to determine the amount of the oxygen sent to the reforming reaction channel 21, by adjusting the mixing rate of the oxygen-containing refrigerant gas Gr. Accordingly, it is possible to adjust the amounts of the water and oxygen sent to the reforming reaction channel 21, the ratio thereof, and the O/C and S/C ratios in the reforming reaction channel 21 properly.

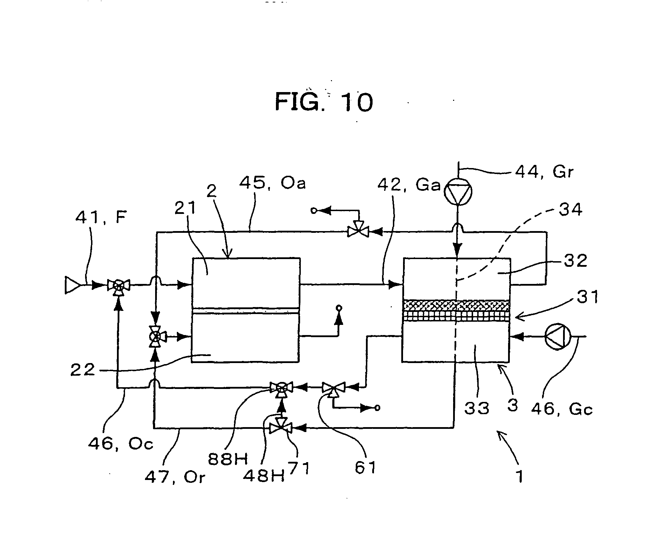

In yet another variation of the variation, the fuel cell system 1 may be configured to mix part of the refrigerant offgas Or discharged from the refrigerant channel 34 with the cathode offgas flowing in the cathode offgas line 46 and send the mixed gas obtained to the reforming reaction channel 21, as shown in Figure 10.

Specifically, the relief port of the refrigerant-offgas three-way regulating valve 71 placed on the refrigerant offgas line 47 is connected to the cathode offgas line 46 via a refrigerant offgas mixing line 48H, and a refrigerant offgas-cathode offgas mixing valve 88H is installed in the connection portion. Part of the refrigerant offgas Or flowing in the refrigerant offgas line 47 can be mixed with the cathode offgas Oc flowing in the cathode offgas line 46.

As described above, it is also possible then to adjust the amounts of the water and oxygen sent to the reforming reaction channel 21, the ratio thereof, and the O/C and S/C ratios in the reforming reaction channel 21 properly, by adjusting the amount of the cathode offgas Oc discharged from the three-way regulating valve 61 and the mixing rate of the refrigerant offgas Or.

It is also possible then to supply a mixed gas of the cathode offgas Oc and the refrigerant offgas Or in the heated state, as it is heated during passage through the fuel cell 3, to the reforming reaction channel 21. Accordingly, it is possible to increase the oxygen amount in the cathode offgas Oc almost without decrease in the temperature of cathode offgas Oc for use in the reforming reaction channel 21.

The two refrigerant-offgas three-way regulating valves 71 may be installed on the refrigerant offgas line 47, and one is used for adjustment of the flow rate of the refrigerant offgas Or flowing in the refrigerant offgas line 47 and the other for mixing of the gases.

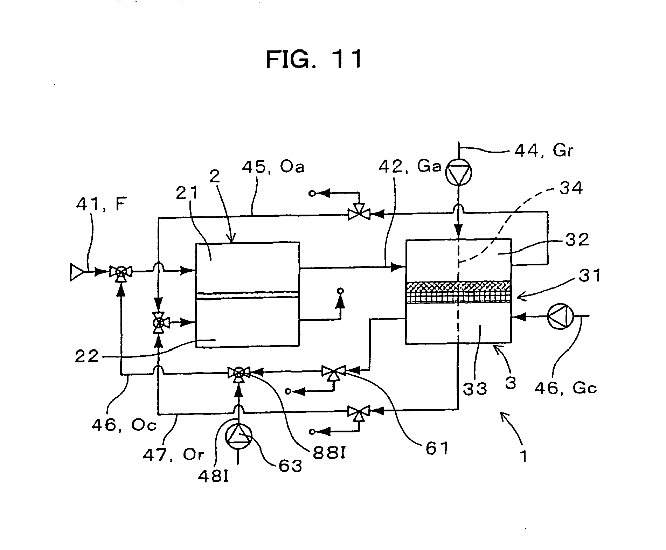

In yet another variation, the fuel cell system 1 may be configured to mix air by supplying air into the cathode offgas line 46 by an air pump 63, as shown in Figure 11.

In such a case, the ejection nozzle of the air pump 63 is connected to the cathode offgas line 46, and a cathode offgas mixing valve 88I is installed in the connection portion. The air ejected by the air pump 63 is mixed with the cathode offgas Oc flowing in the cathode offgas line 46.

As described above, it is also possible then to adjust the amounts of the water and oxygen sent to the reforming reaction channel 21, the ratio thereof, and the O/C and S/C ratios in the reforming reaction channel 21 properly, by adjusting the amount of the cathode offgas Oc discharged from the three-way regulating valve 61 and the mixing rate of the air.

The air pump 63 may be replaced with an oxygen buffer, also in such a case. It is possible then to increase the oxygen amount in the cathode offgas Oc for use in the reforming reaction channel 21 further effectively.

The other components in the present Example are the same as those in Example 1 above, and it is possible to obtain operational advantages similar to those of Example 1 above.

### Example 4

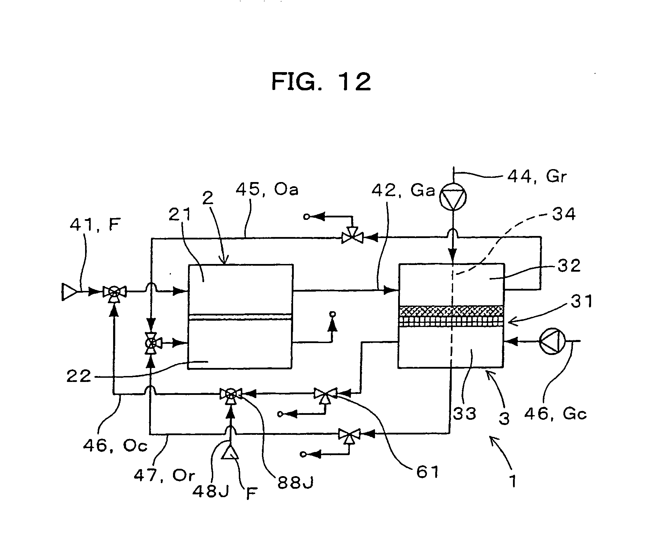

As shown in Figures 12 to 15, the present Example is a variation in which the O/C and S/C rates in the reforming reaction channel 21 of the reformer 2 are adjusted by supplying a particular hydrogen-containing particular gas or fuel from a unit in the fuel cell system 1 or outside the fuel cell system 1 to the cathode offgas line 46, combusting it with the oxygen in the cathode offgas Oc, and thus, adjusting the oxygen amount in the cathode offgas Oc and water content.

In the present Example, a cathode offgas Oc previously adjusted in oxygen concentration by combusting the cathode offgas Oc and the particular gas or fuel in the cathode offgas line 46 are supplied into the reforming reaction channel 21.

A cathode offgas three-way regulating valve 61 is installed on the cathode offgas line 46, also in the present Example.

In another variation, the fuel cell system 1 may be configured to mix reforming fuel F in the cathode offgas line 46, as shown in Figure 12.

In such a case, the feed line of the reforming fuel F is connected to the cathode offgas line 46, and a fuel-cathode offgas mixing valve 88J is installed in the connection portion. The reforming fuel F can thus be mixed with the cathode offgas Oc flowing in the cathode offgas line 46.

It is possible then to combust the reforming fuel F with the oxygen in the cathode offgas Oc (residual oxygen) described above in the cathode offgas line 46. It is possible to reduce the oxygen amount in the cathode offgas Oc and increase the amount of water in the cathode offgas Oc by the combustion.

It is also possible then to adjust the amounts of the water and oxygen sent to the reforming reaction channel 21, the ratio thereof, and the O/C and S/C ratios in the reforming reaction channel 21 properly, by adjusting the amount of gas discharged from the cathode offgas three-way regulating valve 61 and the mixing rate of the reforming fuel F.

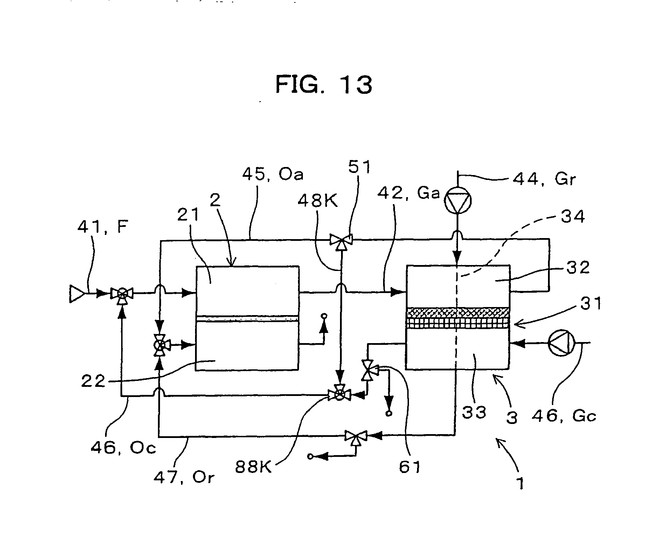

In yet another variation, the fuel cell system 1 may be configured to mix part of the anode offgas Oa flowing in the anode offgas line 45 into the cathode offgas line 46, as shown in Figure 13,

Specifically, the relief port of the anode offgas three-way regulating valve 51 placed on the anode offgas line 45 is connected to the cathode offgas line 46 via an anode offgas mixing line 48K, and an anode offgas-cathode offgas mixing valve 88K is installed in the connection portion. Part of the anode offgas Oa flowing in the anode offgas line 45 can thus be mixed with the cathode offgas Oc flowing in the cathode offgas line 46.

It is possible then to combust the hydrogen flowing in the anode offgas Oa with the oxygen remaining in the cathode offgas in the cathode offgas line 46. It is possible to reduce the oxygen amount in the cathode offgas Oc and increase the amount of water in the cathode offgas Oc by the combustion. In such a case, it is possible to increase the amount of water in the cathode offgas Oc by mixing the cathode offgas Oc with the water in the anode offgas Oa flowing in the cathode offgas line 46.

It is also possible then to adjust the amounts of the water and oxygen sent to the reforming reaction channel 21 and the ratio thereof and the O/C and S/C ratios in the reforming reaction channel 21 properly, by adjusting the amount of the gas discharged from the cathode offgas three-way regulating valve 61 and the mixing rate of the anode offgas.

Two anode offgas three-way regulating valve 51 may be placed on the anode offgas line 45, and one is used for adjustment of the flow rate of the anode offgas Oa flowing in the anode offgas line 45 and the other for mixing.

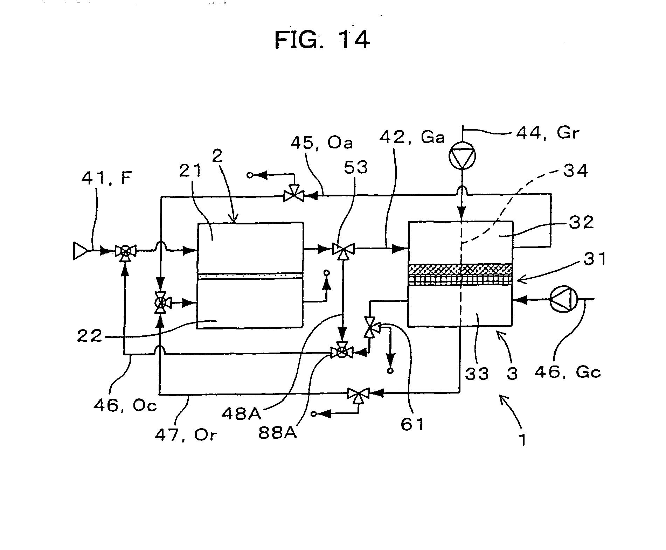

In yet another variation, the fuel cell system 1 may be configure to mix part of the hydrogen-containing reformed gas Ga flowing in the reformed-gas feed line 42 into the cathode offgas line 46, as shown in Figure 14.

Specifically, a reformed-gas three-way regulating valve 53 is placed on the reformed-gas feed line 42. And, the relief port of the reformed-gas three-way regulating valve 53 is connected to the cathode offgas line 46 via a reformed-gas mixing line 48A, and a reformed-gas cathode-offgas mixing valve 88A is installed in the connection portion. Part of the hydrogen-containing reformed gas Ga flowing in the reformed-gas feed line 42 can thus be mixed with the cathode offgas Oc flowing in the cathode offgas line 46.

In such a case, it is possible to combust the hydrogen in the hydrogen-containing reformed gas Ga with the oxygen remaining in the cathode offgas in the cathode offgas line 46. Accordingly, it is possible to decrease the oxygen amount in the cathode offgas Oc and increase the amount of water in the cathode offgas Oc by the combustion.

It is also possible then to adjust the amounts of the water and oxygen sent to the reforming reaction channel 21 and the ratio thereof and the O/C and S/C ratios in the reforming reaction channel 21 properly, by adjusting the amount of the gas discharged from the cathode offgas three-way regulating valve 61 and the mixing rate of the hydrogen-containing reformed gas Ga. In such a case, part of the hydrogen-containing reformed gas Ga is supplied to the reforming reaction channel 21 once again, and thus, it is possible to increase the hydrogen concentration in the hydrogen-containing reformed gas Ga generated in the reforming reaction channel 21.

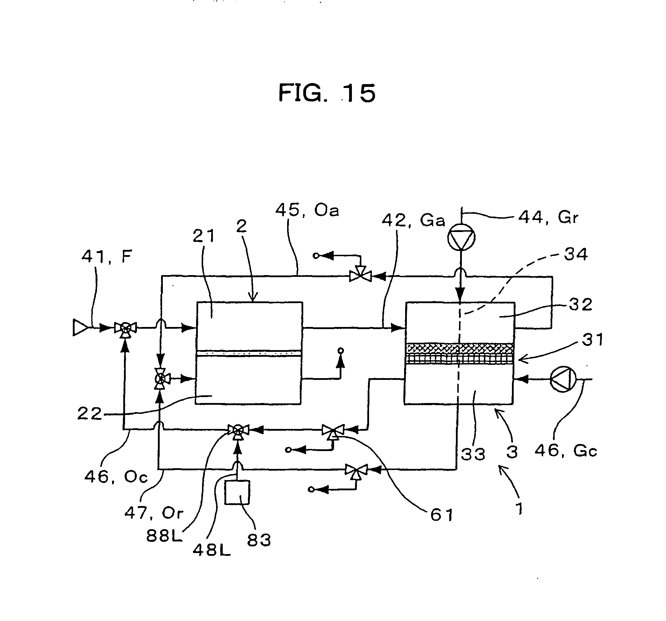

In yet another example, the fuel cell system 1 may be configured to mix the hydrogen from the hydrogen buffer 83 into the cathode offgas line 46, as shown in Figure 15.

In such a case, the hydrogen buffer 83 is connected to the cathode offgas line 46, and a hydrogen-cathode offgas mixing valve 88L is installed in the connection portion. Thus, the hydrogen stored in the hydrogen buffer 83 can be mixed with the cathode offgas Oc flowing in the cathode offgas line 46.

It is possible then to combust hydrogen with the oxygen in the cathode offgas in the cathode offgas line 46. It is possible to decrease the oxygen amount in the cathode offgas Oc and increase the amount of water in the cathode offgas Oc by the combustion.

It is also possible then to adjust the amounts of the water and oxygen sent to the reforming reaction channel 21, the ratio thereof, and the O/C and S/C ratios in the reforming reaction channel 21 properly, by adjusting the amount of the gas discharged from the cathode offgas three-way regulating valve 61 and the mixing rate of the hydrogen,

It is also possible then to supply the cathode offgas as well as hydrogen to the reforming reaction channel 21 and thus, to increase the hydrogen concentration in the hydrogen-containing reformed gas Ga generated in the reforming reaction channel 21 further. The hydrogen buffer 83 may be, for example, a hydrogen cylinder, a hydrogen-absorbing alloy, carbon, or the like.

The other components in the present Example are the same as those in Example 1 above, and it is possible to obtain operational advantages similar to those of Example 1 above.

### Example 5

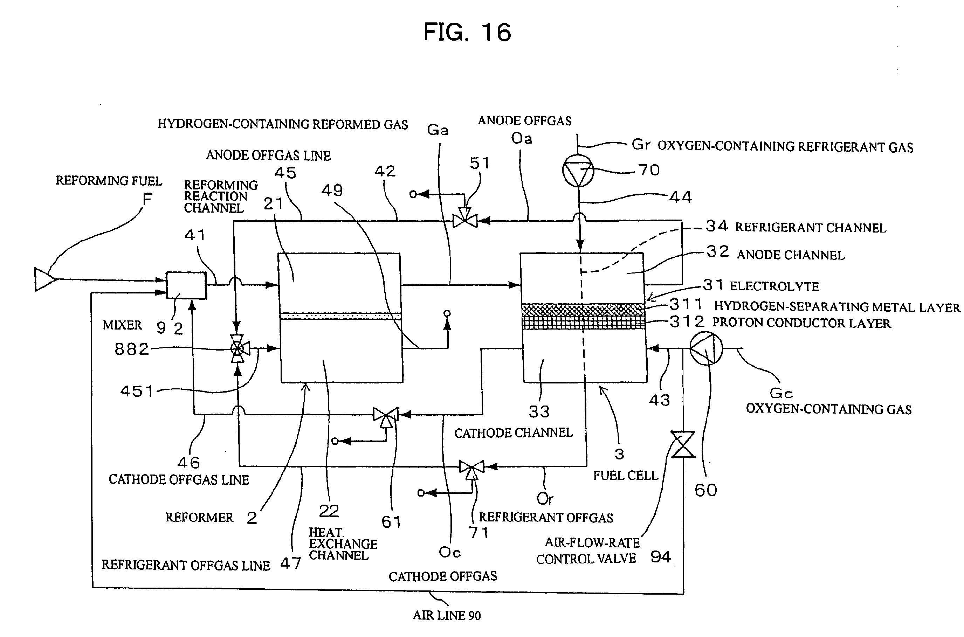

The Example shown in Figures 16 to 18 is a variation in which the reforming fuel F is supplied into the reformer 2 via a mixed 92 connected to the cathode offgas line 46 and the air line 90.

The mixer 92 above is connected to the fuel feed line 41 and communicate with the reformer 2, and the reforming fuel F is mixed with other gases in the mixer 92 and the mixed gas is supplied to the reformer 2. As shown in Figures 16 to 18, it is possible to supply at least the cathode offgas Oc, the oxygen-containing gas Gc and the reforming fuel F to the mixer 92 and to supply the mixed gas into the reformer 2.

The air line 90 is connected to a mixer 92 and an oxygen-containing gas feed line 43 for supply of the oxygen-containing gas Gc to the mixer 92. In addition, an air-flow-rate control valve 94 is installed on the air line 90, for control of the feed rate of the oxygen-containing gas Gc to the mixer 92.

An oxygen-containing gas Gc is supplied to the mixer 92 in the present Example, but a discharge EGR gas such as the anode offgas Oa or the combustion offgas may be supplied instead to the mixer 92.

As shown in Figure 16, the fuel cell system 1 supplies the oxygen-containing gas Gc supplied from the oxygen-containing gas feed line 43 to the mixer 92, and a mixed gas of the reforming fuel F, cathode offgas Oc, and oxygen-containing gas Gc into the reformer 2.

In such a case, it is possible to obtain the amount of oxygen needed for partial oxidation, because it is possible to increase the energy efficiency of the fuel cell system 1 by using the cathode offgas Oc and the reforming fuel F in combination, to mix the oxygen-containing gas Gc supplied from the air line 90 with the reforming fuel F, and to supply the mixture to the reformer 2, when the oxygen amount in the cathode offgas Oc is insufficient.

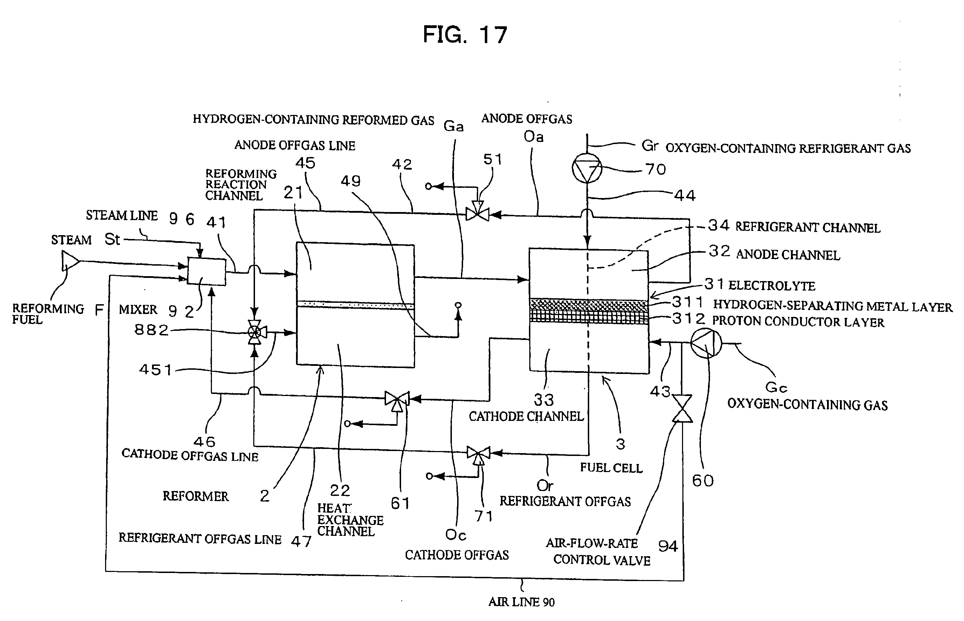

In yet another variation of using the mixer 92, the fuel cell system 1 may be configured to supply steam to the mixer 92 from outside, as shown in Figure 17.

Specifically, it is possible to mix steam St with the reforming fuel F, cathode offgas Oc and the oxygen-containing gas Gc in the mixer 92 and supply the mixture to the reformer 2, by connecting the mixer 92 to a steam line 96.

It is possible then to improve the energy efficiency of the fuel cell system 1 similarly to above, prevent steam insufficiency in the reformer, and thus, assure stable operation of the system.

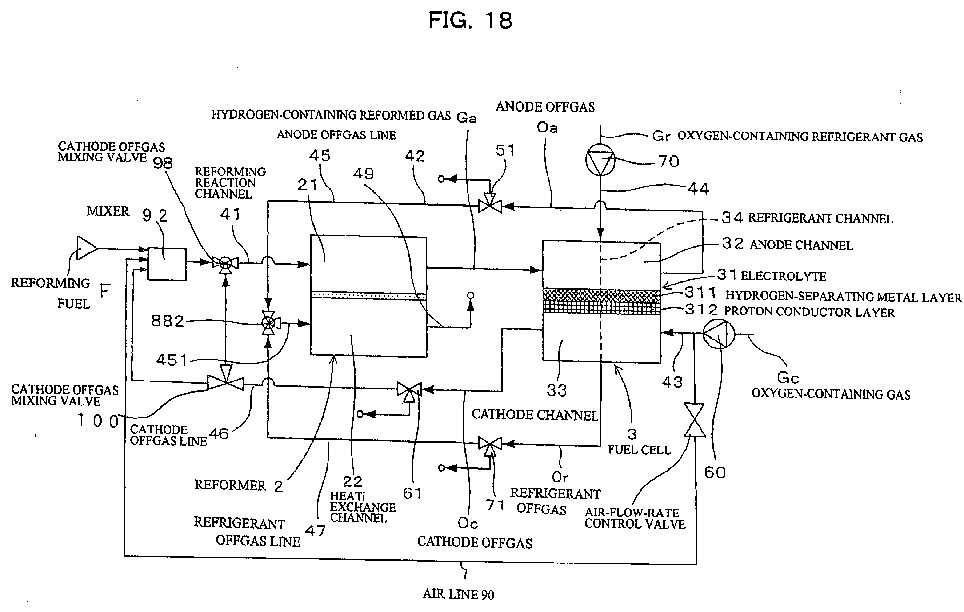

In yet another variation of using the mixer 92, the mixed gas discharged from the mixer 92 may be supplied to the reformer 2 and at the same time, the cathode offgas Oc is supplied directly to the reformer 2, as shown in Figure 18.

Specifically, the mixed gas discharged from the mixer 92 is supplied via the cathode offgas mixing valve 98 to the reformer 2; the cathode offgas line 46 is connected to the cathode offgas mixing valve 100; and the cathode offgas mixing valve 98 is formed in communication with the cathode offgas mixing valve 100 via a direct line 102. In the present Example, part or all of the cathode offgas Oc can be supplied to the mixer 92 via the cathode offgas mixing valve 100, and part or all of the cathode offgas Oc directly to the reformer 2.

In such a case, the flow rate of the reforming fuel F is smaller than that of the cathode offgas, and thus, the cathode offgas flows predominantly in the mixer 92 during the passage period. On the other hand, it takes some time to vaporize and mix the reforming fuel F supplied in the droplet state. It is thus possible to supply particular amounts of water and oxygen, by using part of the cathode offgas, reducing the flow rate thereof so that the time for vaporization of the reforming raw materials is assured, and then, mixing it with a mixed gas containing the other cathode offgas supplied from the mixer.

It is also possible then to assure the amount of oxygen needed for partial oxidation, because it is possible to increase the energy efficiency of the fuel cell system 1 by using the cathode offgas Oc and the reforming fuel F as mixed, to mix the oxygen-containing gas Gc supplied from the air line 90 with the reforming fuel F, and to supply the mixture to the reformer 2, when the oxygen amount in the cathode offgas Oc is insufficient.

The other components in the present Example are the same as those in Example 1 above, and it is possible to obtain operational advantages similar to those of Example 1 above.

### Advantageous Effect of the Invention

As described above, the present invention provides a fuel cell system simpler in structure that allows recovery of all water generated in the cathode channel and improvement in energy efficiency further by using the remaining oxygen and the high-temperature heat energy of the cathode offgas, and a method of generating electricity thereby.

## Claims

1. A fuel cell system (1), comprising a reformer (2) having a reforming reaction channel (21) generating a hydrogen-containing reformed gas (Ga) containing hydrogen from a reforming fuel (F) and a fuel cell (3) generating electricity by using the hydrogen-containing reformed gas (Ga), wherein:
the fuel cell (3) has an anode channel (32) to which the hydrogen-containing reformed gas (Ga) is supplied from the reforming reaction channel (21), a cathode channel (33) to which an oxygen-containing gas (Gc) is supplied, and an electrolyte (31) placed between the cathode and anode channels (33, 32);
the electrolyte (31) has a laminate of a hydrogen-separating metal layer (311) allowing permeation of the hydrogen in the hydrogen-containing reformed gas (Ga) supplied to the anode channel (32) and a proton conductor layer (312) made of a ceramic material converting the hydrogen permeated through the hydrogen-separating metal layer (311) into the proton state, and allowing it to reach the cathode channel (33); and
a cathode offgas line (46) for feeding the cathode offgas (Oc) discharged from the cathode channel (33) into the reforming reaction channel (21) of the reformer (2) is connected to the cathode channel (33) of the fuel cell (3), wherein the cathode offgas line (46) feeds the cathode offgas (Oc) into the reforming reaction channel (21) not via a mixer mixing only the cathode offgas (Oc) with the reforming fuel (F) or a mixer mixing only the cathode offgas (Oc) with the reforming fuel (F) and steam (St).

2. The fuel cell system (1) according to Claim 1, wherein the reformer (2) has a heat exchange channel (22) that is formed close to the reforming reaction channel (21) and that heats the reforming reaction channel (21) by combustion.

3. The fuel cell system (1) according to Claim 2, wherein an anode offgas line (45) for feeding an anode offgas (Oa) discharged from the anode channel (32) into the heat exchange channel (22) is connected to the anode channel (32) of the fuel cell (3).

4. The fuel cell system (1) according to any one of Claims 1 to 3, wherein the fuel cell (3) has a refrigerant channel (34) to which an oxygen-containing refrigerant gas (Gr) for cooling the fuel cell (3) is supplied.

5. The fuel cell system (1) according to Claim 4, wherein a refrigerant offgas line (47) for feeding a refrigerant offgas (Or) discharged from the refrigerant channel (34) into the heat exchange channel (22) is connected to the refrigerant channel (34) of the fuel cell (3).

6. The fuel cell system (1) according to any one of Claims 1 to 5, wherein an exhaust three-way regulating valve (61) is installed on the cathode offgas line (46), part of the cathode offgas (Oc) is discharged via the exhaust three-way regulating valve (61), and a remaining part of the cathode offgas (Oc) is fed into the reforming reaction channel (21).

7. The fuel cell system (1) according to any one of Claims 2 to 6, wherein a supply three-way regulating valve (611) is installed on the cathode offgas line (46), part of the cathode offgas (Oc) is fed into the heat exchange channel (22) via the supply three-way regulating valve (611), and a remaining part of the cathode offgas (Oc) is fed into the reforming reaction channel (21).

8. The fuel cell system (1) according to any one of Claims 1 to 6, wherein a resupply three-way regulating valve (612) is installed on the cathode offgas line (46), part of the cathode offgas (Oc) is resupplied to the cathode channel (33) via the resupply three-way regulating valve (612), and a remaining part of the cathode offgas (Oc) is fed into the reforming reaction channel (21).

9. The fuel cell system (1) according to any one of Claims 1 to 6, wherein an oxygen-separating membrane (81) is installed on the cathode offgas line (46), and part of oxygen in the cathode offgas (Oc) is discharged through the oxygen-separating membrane (81).

10. The fuel cell system (1) according to any one of Claims 1 to 6, wherein an oxygen-separating membrane (81) is installed on the cathode offgas line (46), and part of oxygen in the cathode offgas (Oc) is resupplied into the cathode channel (33) through the oxygen-separating membrane (81).

11. The fuel cell system (1) according to any one of Claims 2 to 6, wherein an oxygen-separating membrane (81) is installed on the cathode offgas line (46), and part of oxygen in the cathode offgas (Oc) is fed into the heat exchange channel (22) through the oxygen-separating membrane (81).

12. The fuel cell system (1) according to any one of Claims 1 to 6, wherein an oxygen-separating membrane (81) is installed on the cathode offgas line (46), and part of oxygen in the cathode offgas (Oc) is stored in an oxygen buffer (82) through the oxygen-separating membrane (81).

13. The fuel cell system (1) according to any one of Claims 4 to 12, wherein part of the oxygen-containing refrigerant gas (Gr) is mixed into the cathode offgas line (46).

14. The fuel cell system (1) according to any one of Claims 5 to 12, wherein part of the refrigerant offgas (Or) is mixed into the cathode offgas line (46).

15. The fuel cell system (1) according to any one of Claims 1 to 12, wherein air is mixed into the cathode offgas line (46).

16. The fuel cell system (1) according to any one of Claims 1 to 12, wherein oxygen is mixed into the cathode offgas line (46).

17. The fuel cell system (1) according to any one of Claims 3 to 12, wherein part of the anode offgas (Oa) is mixed into the cathode offgas line (46).

18. The fuel cell system (1) according to any one of Claims 1 to 12, wherein part of the hydrogen-containing reformed gas (Ga) is mixed into the cathode offgas line (46).

19. The fuel cell system (1) according to any one of Claims 1 to 12, wherein hydrogen is mixed into the cathode offgas line (46).

20. A method of generating electricity in a fuel cell system (1) including a reformer (2) having a reforming reaction channel (21) generating a hydrogen-containing reformed gas (Ga) containing hydrogen from a reforming fuel (F) and a fuel cell (3) generating electricity by using the hydrogen-containing reformed gas (Ga), wherein the fuel cell (3) has an anode channel (32) to which the hydrogen-containing reformed gas (Ga) is supplied from the reforming reaction channel (21), a cathode channel (33) to which an oxygen-containing gas (Gc) is supplied, and an electrolyte (31) placed between the cathode and anode channels (33, 32), and the electrolyte (31) is a laminate of a hydrogen-separating metal layer (311) allowing permeation of the hydrogen in the hydrogen-containing reformed gas (Ga) supplied to the anode channel (32) and a proton conductor layer (312) made of a ceramic material converting the hydrogen permeated through the hydrogen-separating metal layer (311) into the proton state and allowing it to reach the cathode channel (33); and the method comprising:
supplying the hydrogen-containing reformed gas (Ga) generated in the reforming reaction channel (21) to the anode channel (32);
allowing the hydrogen in the hydrogen-containing reformed gas (Ga) to permeate from the anode channel (32) through the hydrogen-separating metal layer (311) and reach the cathode channel (33) through the proton conductor layer (312) in the proton state; and
allowing the proton to react with the oxygen in the oxygen-containing gas (Gc) in the cathode channel (33), generating electricity; and additionally,
feeding a cathode offgas (Oc) discharged from the cathode channel (33) to the reforming reaction channel (21); and
allowing the reforming fuel (F) to react with the cathode offgas (Oc), generating the hydrogen-containing reformed gas (Ga) in the reforming reaction channel (21), wherein the cathode offgas (Oc) is fed via the cathode offgas line (46) into the reforming reaction channel (21) not via a mixer mixing only the cathode offgas (Oc) with the reforming fuel (F) or a mixer mixing only the cathode offgas (Oc) with the reforming fuel (F) and steam (St).

21. The method of generating electricity in a fuel cell system (1) according to Claim 20, wherein:
the reformer (2) has a heat exchange channel (22) that is formed close to the reforming reaction channel (21) and that heats the reforming reaction channel (21) by combustion;
the fuel cell (3) has a refrigerant channel (34) to which an oxygen-containing refrigerant gas (Gr) for cooling the fuel cell (3) is supplied; and the method comprising;
the heating is performed by feeding an anode offgas (Oa) discharged from the anode channel (32) and a refrigerant offgas (Or) discharged from the refrigerant channel (34) to the heat exchange channel (22), and combusting the anode offgas (Oa) with the refrigerant offgas (Or) in the heat exchange channel (22).

## Patentansprüche

1. Brennstoffzellensystem (1), das einen Reformer (2) mit einem Reformierreaktionskanal (21), der aus einem Reformierbrennstoff (F) ein wasserstoffhaltiges reformiertes Gas (Ga) erzeugt, das Wasserstoff enthält, und eine Brennstoffzelle (3) umfasst, die unter Verwendung des wasserstoffhaltigen reformierten Gases (Ga) Elektrizität erzeugt, wobei:
die Brennstoffzelle (3) einen Anodenkanal (32), dem von dem Reformierreaktionskanal (21) aus das wasserstoffhaltige reformierte Gas (Ga) zugeführt wird, einen Kathodenkanal (33), dem ein sauerstoffhaltiges Gas (Gc) zugeführt wird, und einen Elektrolyt (31) hat, der zwischen den Kathoden- und Anodenkanälen (33, 32) platziert ist;
der Elektrolyt (31) eine Aufschichtung aus einer Wasserstoff abtrennenden Metallschicht (311), die einen Durchgang des Wasserstoffs in dem wasserstoffhaltigen reformierten Gas (Ga), das dem Anodenkanal (32) zugeführt wird, erlaubt, und einer Protonenleiterschicht (312) hat, die aus einem Keramikmaterial besteht, das den Wasserstoff, der durch die Wasserstoff abtrennende Metallschicht (311) hindurchgegangenen ist, in den Protonenzustand umwandelt und ihm erlaubt, den Kathodenkanal (33) zu erreichen; und
mit dem Kathodenkanal (33) der Brennstoffzelle (3) eine Kathodenabgasleitung (46) zum Einspeisen des von dem Kathodenkanal (33) abgegebenen Kathodenabgases (Oc) in den Reformierreaktionskanal (21) des Reformers (2) verbunden ist, wobei die Kathodenabgasleitung (46) das Kathodenabgas (Oc) nicht über einen Mischer, der das Kathodenabgas (Oc) nur mit dem Reformierbrennstoff (F) mischt, oder einen Mischer, der das Kathodenabgas (Oc) nur mit dem Reformierbrennstoff (F) und Dampf (St) mischt, in den Reformierreaktionskanal (21) einspeist.

2. Brennstoffzellensystem (1) nach Anspruch 1, wobei der Reformer (2) einen Wärmeaustauschkanal (22) hat, der nahe an dem Reformierreaktionskanal (21) ausgebildet ist und der den Reformierreaktionskanal (21) durch Verbrennung erwärmt.

3. Brennstoffzellensystem (1) nach Anspruch 2, wobei mit dem Anodenkanal (32) der Brennstoffzelle (3) eine Anodenabgasleitung (45) zum Einspeisen eines von dem Anodenkanal (32) abgegebenen Anodenabgases (Oa) in den Wärmeaustauschkanal (22) verbunden ist.

4. Brennstoffzellensystem nach einem der Ansprüche 1 bis 3, wobei die Brennstoffzelle (3) einen Kühlmittelkanal (34) hat, dem ein sauerstoffhaltiges Kühlmittelgas (Gr) zum Kühlen der Brennstoffzelle (3) zugeführt wird.

5. Brennstoffzellensystem (1) nach Anspruch 4, wobei mit dem Kühlmittelkanal (34) der Brennstoffzelle (3) eine Kühlmittelabgasleitung (47) zum Einspeisen eines von dem Kühlmittelkanal (34) abgegebenen Kühlmittelabgases (Or) in den Wärmeaustauschkanal (22) verbunden ist.

6. Brennstoffzellensystem (1) nach einem der Ansprüche 1 bis 5, wobei auf der Kathodenabgasleitung (46) ein Abgas-Dreiwege-Regelventil (61) installiert ist, über das Abgas-Dreiwege-Regelventil (61) ein Teil des Kathodenabgases (Oc) abgegeben wird und ein übriger Teil des Kathodenabgases (Oc) in den Reformierreaktionskanal (21) eingespeist wird.

7. Brennstoffzellensystem (1) nach einem der Ansprüche 2 bis 6, wobei auf der Kathodenabgasleitung (46) ein Zufuhr-Dreiwege-Regelventil (611) installiert ist, über das Zufuhr-Dreiwege-Regelventil (611) ein Teil des Kathodenabgases (Oc) in den Wärmeaustauschkanal (22) eingespeist wird und ein übriger Teil des Kathodenabgases (Oc) in den Reformierreaktionskanal (21) eingespeist wird.

8. Brennstoffzellensystem (1) nach einem der Ansprüche 1 bis 6, wobei auf der Kathodenabgasleitung (46) ein Wiederzufuhr-Dreiwege-Regelventil (612) installiert ist, über das Wiederzufuhr-Dreiwege-Regelventil (612) ein Teil des Kathodenabgases (Oc) wieder dem Kathodenkanal (33) zugeführt wird und ein übriger Teil des Kathodenabgases (Oc) in den Reformierreaktionskanal (21) eingespeist wird.

9. Brennstoffzellensystem (1) nach einem der Ansprüche 1 bis 6, wobei auf der Kathodenabgasleitung (46) eine Sauerstoff abtrennende Membran (81) installiert ist und ein Teil des Sauerstoffs im Kathodenabgas (Oc) über die Sauerstoff abtrennende Membran (81) abgegeben wird.

10. Brennstoffzellensystem (1) nach einem der Ansprüche 1 bis 6, wobei auf der Kathodenabgasleitung (46) eine Sauerstoff abtrennende Membran (81) installiert ist und ein Teil des Sauerstoffs im Kathodenabgas (Oc) über die Sauerstoff abtrennende Membran (81) wieder in den Kathodenkanal (33) zugeführt wird.

11. Brennstoffzellensystem (1) nach einem der Ansprüche 2 bis 6, wobei auf der Kathodenabgasleitung (46) eine Sauerstoff abtrennende Membran (81) installiert ist und ein Teil des Sauerstoffs im Kathodenabgas (Oc) über die Sauerstoff abtrennende Membran (81) in den Wärmeaustauschkanal (22) eingespeist wird.

12. Brennstoffzellensystem (1) nach einem der Ansprüche 1 bis 6, wobei auf der Kathodenabgasleitung (46) eine Sauerstoff abtrennende Membran (81) installiert ist und ein Teil des Sauerstoffs im Kathodenabgas (Oc) über die Sauerstoff abtrennende Membran (81) in einem Sauerstoffpuffer (82) gespeichert wird.

13. Brennstoffzellensystem (1) nach einem der Ansprüche 4 bis 12, wobei in die Kathodenabgasleitung (46) ein Teil des sauerstoffhaltigen Kühlmittelgases (Gr) eingemischt wird.

14. Brennstoffzellensystem (1) nach einem der Ansprüche 5 bis 12, wobei in die Kathodenabgasleitung (46) ein Teil des Kühlmittelabgases (Or) eingemischt wird.

15. Brennstoffzellensystem (1) nach einem der Ansprüche 1 bis 12, wobei in die Kathodenabgasleitung (46) Luft eingemischt wird.

16. Brennstoffzellensystem (1) nach einem der Ansprüche 1 bis 12, wobei in die Kathodenabgasleitung (46) Sauerstoff eingemischt wird.

17. Brennstoffzellensystem (1) nach einem der Ansprüche 3 bis 12, wobei in die Kathodenabgasleitung (46) ein Teil des Anodenabgases (Oa) eingemischt wird.

18. Brennstoffzellensystem (1) nach einem der Ansprüche 1 bis 12, wobei in die Kathodenabgasleitung (46) ein Teil des wasserstoffhaltigen reformierten Gases (Ga) eingemischt wird.

19. Brennstoffzellensystem (1) nach einem der Ansprüche 1 bis 12, wobei in die Kathodenabgasleitung (46) Wasserstoff eingemischt wird.

20. Verfahren zur Erzeugung von Elektrizität in einem Brennstoffzellensystem (1), das einen Reformer (2) mit einem Reformierreaktionskanal (21), der aus einem Reformierbrennstoff (F) ein wasserstoffhaltiges reformiertes Gas (Ga) erzeugt, das Wasserstoff enthält, und eine Brennstoffzelle (3) umfasst, die unter Verwendung des wasserstoffhaltigen reformierten Gases (Ga) Elektrizität erzeugt, wobei die Brennstoffzelle (3) einen Anodenkanal (32), dem von dem Reformierreaktionskanal (21) aus das wasserstoffhaltige reformierte Gas (Ga) zugeführt wird, einen Kathodenkanal (33), dem ein sauerstoffhaltiges Gas (Gc) zugeführt wird, und einen Elektrolyt (31) hat, der zwischen den Kathoden- und Anodenkanälen (33, 32) platziert ist, und der Elektrolyt (31) eine Aufschichtung aus einer Wasserstoff abtrennenden Metallschicht (311), die einen Durchgang des Wasserstoffs in dem wasserstoffhaltigen reformierten Gas (Ga), das dem Anodenkanal (32) zugeführt wird, erlaubt, und einer Protonenleiterschicht (312) ist, die aus einem Keramikmaterial besteht, das den Wasserstoff, der durch die Wasserstoff abtrennende Metallschicht (311) hindurchgegangenen ist, in den Protonenzustand umwandelt und ihm erlaubt, den Kathodenkanal (33) zu erreichen; und das Verfahren Folgendes umfasst:
Zuführen des im Reformierreaktionskanal (21) erzeugten wasserstoffhaltigen reformierten Gases (Ga) zum Anodenkanal (32);
Erlauben, dass der Wasserstoff im wasserstoffhaltigen reformierten Gas (Ga) von dem Anodenkanal (32) aus durch die Wasserstoff abtrennende Metallschicht (311) hindurchgeht und über die Protonenleiterschicht (312) im Protonenzustand den Kathodenkanal (33) erreicht; und
Erlauben, dass das Proton unter Erzeugung von Elektrizität mit dem Sauerstoff in dem sauerstoffhaltigen Gas (Gc) im Kathodenkanal (33) reagiert; und zusätzlich
Speisen eines Kathodenabgases (Oc), das von dem Kathodenkanal (33) abgegeben wird, zum Reformierreaktionskanal (21); und
Erlauben, dass der Reformierbrennstoff (F) unter Erzeugung des wasserstoffhaltigen reformierten Gases (Ga) in dem Reformierreaktionskanal (21) mit dem Kathodenabgas (Oc) reagiert, wobei das Kathodenabgas (Oc) über die Kathodenabgasleitung (46) in den Reformierreaktionskanal (21) eingespeist wird, nicht über einen Mischer, der das Kathodenabgas (Oc) nur mit dem Reformierbrennstoff (F) mischt, oder einen Mischer, der das Kathodenabgas (Oc) nur mit dem Reformierbrennstoff (F) und Dampf (St) mischt.

21. Verfahren zur Erzeugung von Elektrizität in einem Brennstoffzellensystem (1) nach Anspruch 20, wobei:
der Reformer (2) einen Wärmeaustauschkanal (22) hat, der nahe an dem Reformierreaktionskanal (21) ausgebildet ist und der den Reformierreaktionskanal (21) durch Verbrennung erwärmt;
die Brennstoffzelle (3) einen Kühlmittelkanal (34) hat, dem ein sauerstoffhaltiges Kühlmittelgas (Gr) zum Kühlen der Brennstoffzelle (3) zugeführt wird; und das Verfahren Folgendes umfasst:
dass das Erwärmen erfolgt, indem ein Anodenabgas (Oa), das von dem Anodenkanal (32) abgegeben wird, und ein Kühlmittelabgas (Or), das von dem Kühlmittelkanal (34) abgegeben wird, zum Wärmeaustauschkanal (22) gespeist werden und das Anodenabgas (Oa) mit dem Kühlmittelabgas (Or) in dem Wärmeaustauschkanal (22) verbrannt wird.

## Revendications

1. Système de pile à combustible (1), comprenant un reformeur (2) ayant un canal de réaction de reformage (21) générant un gaz reformé contenant de l'hydrogène (Ga) contenant de l'hydrogène à partir d'un combustible de reformage (F) et une pile à combustible (3) générant de l'électricité en utilisant le gaz reformé contenant de l'hydrogène (Ga), dans lequel :
la pile à combustible (3) comprend un canal d'anode (32) vers lequel le gaz reformé contenant de l'hydrogène (Ga) est alimenté depuis le canal de réaction de reformage (21), un canal de cathode (33) vers lequel un gaz contenant de l'oxygène (Gc) est alimenté, et un électrolyte (31) placé entre les canaux de cathode et d'anode (33, 32) ;
l'électrolyte (31) comprend un laminé d'une couche de métal de séparation d'hydrogène (311) permettant la perméation de l'hydrogène dans le gaz reformé contenant de l'hydrogène (Ga) alimenté dans le canal d'anode (32) et une couche conductrice de proton (312) constituée d'un matériau céramique convertissant l'hydrogène traversant par perméation la couche de métal de séparation d'hydrogène (311) à l'état de proton, et laissant celui-ci atteindre le canal de cathode (33) ; et
une voie de gaz de dégagement de cathode (46) pour alimenter le gaz de dégagement de cathode (Oc) déchargé depuis le canal de cathode (33) dans le canal de réaction de reformage (21) du reformeur (2) est raccordé au canal de cathode (33) de la pile à combustible (3), la voie de gaz de dégagement de cathode (46) alimentant le gaz de dégagement de cathode (Oc) dans le canal de réaction de reformage (21) non via un mélangeur mélangeant uniquement le gaz de dégagement de cathode (Oc) avec le combustible de reformage (F) ou un mélangeur mélangeant uniquement le gaz de dégagement de cathode (Oc) avec le combustible de reformage (F) et de la vapeur (St).

2. Système de pile à combustible (1) selon la revendication 1, dans lequel le reformeur (2) comprend un canal d'échange de chaleur (22) qui est formé à proximité du canal de réaction de reformage (21) et qui chauffe le canal de réaction de reformage (21) par combustion.

3. Système de pile à combustible (1) selon la revendication 2, dans lequel une voie de gaz de dégagement d'anode (45) pour alimenter un gaz de dégagement d'anode (Oa) déchargé depuis le canal d'anode (32) dans le canal d'échange de chaleur (22) est raccordée au canal d'anode (32) de la pile à combustible (3).

4. Système de pile à combustible (1) selon l'une quelconque des revendications 1 à 3, dans lequel la pile à combustible (3) comprend un canal de réfrigérant (34) vers lequel un gaz réfrigérant contenant de l'oxygène (Gr) pour refroidir la pile à combustible (3) est alimenté.

5. Système de pile à combustible (1) selon la revendication 4, dans lequel une voie de gaz de dégagement réfrigérant (47) pour alimenter un gaz de dégagement réfrigérant (Or) déchargé depuis le canal de réfrigérant (34) dans le canal d'échange de chaleur (22) est raccordé au canal de réfrigérant (34) de la pile à combustible (3).

6. Système de pile à combustible (1) selon l'une quelconque des revendications 1 à 5, dans lequel une vanne de régulation à trois voies d'échappement (61) est installée sur la voie de gaz de dégagement de cathode (46), une partie du gaz de dégagement de cathode (Oc) est déchargée via la vanne de régulation d'échappement trois voies (61), et une partie résiduelle du gaz de dégagement de cathode (Oc) est alimentée dans le canal de réaction de reformage (21).

7. Système de pile à combustible (1) selon l'une quelconque des revendications 2 à 6, dans lequel une vanne de référence à trois voies d'alimentation (611) est installée sur la voie de gaz de dégagement de cathode (46), une partie du gaz de dégagement de cathode (Oc) est alimentée dans le canal d'échange de chaleur (22) via la vanne de régulation d'alimentation trois voies (611), et une partie résiduelle du gaz de dégagement de cathode (Oc) est alimentée dans le canal de réaction de reformage (21).

8. Système de pile à combustible (1) selon l'une quelconque des revendications 1 à 6, dans lequel une vanne de régulation à trois voies de réalimentation (612) est installée sur la voie de gaz de dégagement de cathode (46), une partie du gaz de dégagement de cathode (Oc) est réalimentée dans le canal de cathode (33) via la vanne de régulation trois voies de réalimentation (612), et une partie résiduelle du gaz de dégagement de cathode (Oc) est alimentée dans le canal de réaction de reformage (21).

9. Système de pile à combustible (1) selon l'une quelconque des revendications 1 à 6, dans lequel une membrane de séparation d'oxygène (81) est installée sur la voie de gaz de dégagement de cathode (46), et une partie d'oxygène dans le gaz de dégagement de cathode (Oc) est déchargée à travers la membrane de séparation d'oxygène (81).

10. Système de pile à combustible (1) selon l'une quelconque des revendications 1 à 6, dans lequel une membrane de séparation d'oxygène (81) est installée sur la voie de gaz de dégagement de cathode (46), et une partie d'oxygène dans le gaz de dégagement de cathode (Oc) est réalimentée dans le canal de cathode (33) à travers la membrane de séparation d'oxygène (81).

11. Système de pile à combustible (1) selon l'une quelconque des revendications 2 à 6, dans lequel une membrane de séparation d'oxygène (81) est installée sur la voie de gaz de dégagement de cathode (46), et une partie d'oxygène dans le gaz de dégagement de cathode (Oc) est alimentée dans le canal d'échange de chaleur (22) à travers la membrane de séparation d'oxygène (81).

12. Système de pile à combustible (1) selon l'une quelconque des revendications 1 à 6, dans lequel une membrane de séparation d'oxygène (81) est installée sur la voie de gaz de dégagement de cathode (46), et une partie d'oxygène dans le gaz de dégagement de cathode (Oc) est stockée dans un tampon d'oxygène (82) à travers la membrane de séparation d'oxygène (81).

13. Système de pile à combustible (1) selon l'une quelconque des revendications 4 à 12, dans lequel une partie du gaz réfrigérant contenant de l'oxygène (Gr) est mélangée dans la voie de gaz de dégagement de cathode (46).

14. Système de pile à combustible (1) selon l'une quelconque des revendications 5 à 12, dans lequel une partie du gaz de dégagement réfrigérant (Or) est mélangée dans la voie de gaz de dégagement de cathode (46).

15. Système de pile à combustible (1) selon l'une quelconque des revendications 1 à 12, dans lequel de l'air est mélangé dans la voie de gaz de dégagement de cathode (46).

16. Système de pile à combustible (1) selon l'une quelconque des revendications 1 à 12, dans lequel de l'oxygène est mélangé dans la voie de gaz de dégagement de cathode (46).

17. Système de pile à combustible (1) selon l'une quelconque des revendications 3 à 12, dans lequel une partie du gaz de dégagement d'anode (Oa) est mélangée dans la voie de gaz de dégagement de cathode (46).

18. Système de pile à combustible (1) selon l'une quelconque des revendications 1 à 12, dans lequel une partie du gaz reformé contenant de l'hydrogène (Ga) est mélangée dans la voie de gaz de dégagement de cathode (46).

19. Système de pile à combustible (1) selon l'une quelconque des revendications 1 à 12, dans lequel de l'hydrogène est mélangé dans la voie de gaz de dégagement de cathode (46).

20. Procédé de génération d'électricité dans un système de pile à combustible (1) comprenant un reformeur (2) ayant un canal de réaction de reformage (21) générant un gaz reformé contenant de l'hydrogène (Ga) contenant de l'hydrogène provenant d'un combustible de reformage (F) et une pile à combustible (3) générant de l'électricité en utilisant le gaz reformé contenant de l'hydrogène (Ga), dans lequel la pile à combustible (3) comprend un canal d'anode (32) dans lequel le gaz reformé contenant de l'hydrogène (Ga) est alimenté depuis le canal de réaction de reformage (21), un canal de cathode (33) dans lequel un gaz contenant de l'oxygène (Gc) est alimenté, et un électrolyte (31) placé entre les canaux de cathode et d'anode (33, 32), et l'électrolyte (31) est un laminé d'une couche de métal de séparation d'hydrogène (311) permettant la perméation de l'hydrogène dans le gaz reformé contenant de l'hydrogène (Ga) alimenté dans le canal d'anode (32) et une couche conductrice de proton (312) constituée d'un matériau céramique convertissant l'hydrogène traversant par perméation la couche de métal de séparation d'hydrogène (311) à l'état de proton et laissant celui-ci atteindre le canal de cathode (33) ; et le procédé comprenant les étapes consistant à :
alimenter le gaz reformé contenant de l'hydrogène (Ga) généré dans le canal de réaction de reformage (21) dans le canal d'anode (32);
laisser l'hydrogène dans le gaz reformé contenant de l'hydrogène (Ga) passer par perméation depuis le canal d'anode (32) à travers la couche de métal de séparation d'hydrogène (311) et atteindre le canal de cathode (33) à travers la couche conductrice de proton (312) à l'état de proton ; et
laisser le proton réagir avec l'oxygène dans le gaz contenant de l'oxygène (Gc) dans le canal de cathode (33), en générant de l'électricité ; et en outre,
alimenter un gaz de dégagement de cathode (Oc) déchargé depuis le canal de cathode (33) vers le canal de réaction de reformage (21); et
laisser le combustible de reformage (F) réagir avec le gaz de dégagement de cathode (Oc), en générant le gaz reformé contenant de l'hydrogène (Ga) dans le canal de réaction de reformage (21), dans lequel le gaz de dégagement de cathode (Oc) est alimenté par l'intermédiaire de la voie de gaz de dégagement de cathode (46) dans le canal de réaction de reformage (21) non via un mélangeur mélangeant uniquement le gaz de dégagement de cathode (Oc) avec le combustible de reformage (F) ou un mélangeur mélangeant uniquement le gaz de dégagement de cathode (Oc) avec le combustible de reformage (F) et de la vapeur (St).

21. Procédé de génération d'électricité dans un système de pile à combustible (1) selon la revendication 20, dans lequel :
le reformeur (2) comprend un canal d'échange de chaleur (22) qui est formé à proximité du canal de réaction de reformage (21) et qui chauffe le canal de réaction de reformage (21) par combustion ;
la pile à combustible (3) a un canal de réfrigérant (34) dans lequel un gaz réfrigérant contenant de l'oxygène (Gr) pour refroidir la pile à combustible (3) est alimenté ; et le procédé comprenant :
le chauffage est effectué par alimentation d'un gaz de dégagement d'anode (Oa) déchargé depuis le canal d'anode (32) et un gaz de dégagement de réfrigérant (Or) déchargé depuis le canal de réfrigérant (34) vers le canal d'échange de chaleur (22), et la combustion du gaz de dégagement d'anode (Oa) avec le gaz de dégagement de réfrigérant (Or) dans le canal d'échange de chaleur (22).
